(19) Europäisches Patentamt
European Patent Office
Office européen des brevets

(11) **EP 4 579 321 A1**

(12) **EUROPEAN PATENT APPLICATION**
published in accordance with Art. 153(4) EPC

(43) Date of publication:
**02.07.2025 Bulletin 2025/27**

(21) Application number: **24756066.7**

(22) Date of filing: **04.02.2024**

(51) International Patent Classification (IPC):
*G02B 27/64* (2006.01)    *H04N 23/55* (2023.01)
*H04N 23/68* (2023.01)    *G02B 7/09* (2021.01)
*G03B 5/00* (2021.01)    *G03B 13/36* (2021.01)

(86) International application number:
**PCT/CN2024/075800**

(87) International publication number:
**WO 2024/169692 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023 CN 202310152040**

(71) Applicant: **Huawei Technologies Co., Ltd.
Shenzhen, Guangdong 518129 (CN)**

(72) Inventors:
• **HOU, Qing
Shenzhen, Guangdong 518129 (CN)**
• **LIU, Bin
Shenzhen, Guangdong 518129 (CN)**
• **ZHU, Xueqian
Shenzhen, Guangdong 518129 (CN)**
• **WANG, Peng
Shenzhen, Guangdong 518129 (CN)**
• **LI, Zhangcheng
Shenzhen, Guangdong 518129 (CN)**
• **LI, Dengfeng
Shenzhen, Guangdong 518129 (CN)**
• **HUANG, Changfu
Shenzhen, Guangdong 518129 (CN)**

(74) Representative: **Grünecker Patent- und
Rechtsanwälte
PartG mbB
Leopoldstraße 4
80802 München (DE)**

(54) **MOTOR, CAMERA MODULE, AND ELECTRONIC DEVICE**

(57)    Provided are a motor (1), a camera module (100), and an electronic device (1000). The motor (1) includes a base (11), an image stabilization carrier (12), a focus carrier (21), an image stabilization drive mechanism (13), and a focus drive mechanism (22). The image stabilization carrier (12) is movably connected to the base (11), the focus carrier (21) is located on an inner side of the image stabilization carrier (12), the focus carrier (21) is movably connected to the image stabilization carrier (12), and the focus carrier (21) is configured to mount a lens (2). The image stabilization drive mechanism (13) is configured to drive the image stabilization carrier (12) and the focus carrier (21) to move in a first direction and/or a second direction relative to the base (11), and the focus drive mechanism (22) is configured to drive the focus carrier (21) to move in a third direction relative to the image stabilization carrier (12). When the camera module (100) needs to focus, the image stabilization carrier (12) may be not needed for a moving component in a focusing process, that is, a weight of a moving component formed by the focus carrier (21), the lens (2), and a variable aperture (3) is relatively light.

Therefore, it is beneficial to miniaturization of the focus drive mechanism (22), and the moving component in the focusing process is not easy to overturn and has better stability.

FIG. 14

EP 4 579 321 A1

## Description

This application claims priority to Chinese Patent Application No. 202310152040.7, filed with the China National Intellectual Property Administration on February 15, 2023, and entitled "MOTOR, CAMERA MODULE, AND ELECTRONIC DEVICE", which is incorporated herein by reference in its entirety.

## TECHNICAL FIELD

This application relates to the field of camera technologies, and in particular, to a motor, a camera module, and an electronic device.

## BACKGROUND

With popularization and development of smartphones, photographing by using a mobile phone becomes a photographing manner commonly used by people, and a mobile phone having both an optical image stabilization function and an auto focus function is increasingly popular among users. A conventional camera module includes an image stabilization motor and a focus motor. The image stabilization motor is located on an inner side of the focus motor. When the camera module needs to focus, the focus motor needs to drive structures such as the image stabilization motor, a lens, and a variable aperture to move in an optical axis direction. As such, a weight of a moving component formed by the focus motor, the image stabilization motor, the lens, the variable aperture, and the like is relatively heavy, which easily causes the moving component to overturn and have relatively poor reliability.

## SUMMARY

Embodiments of this application provide a motor, a camera module including the motor, and an electronic device including the camera module, to obtain a motor and a camera module with a moving component that is not easy to overturn and has better reliability.

According to a first aspect, a motor is provided. The motor includes a base, an image stabilization carrier, a focus carrier, an image stabilization drive mechanism, and a focus drive mechanism. The image stabilization carrier is movably connected to the base, the focus carrier is located on an inner side of the image stabilization carrier, the focus carrier is movably connected to the image stabilization carrier, and the focus carrier is configured to mount a lens. The image stabilization drive mechanism is configured to drive the image stabilization carrier and the focus carrier to move in a first direction and/or a second direction relative to the base, and the focus drive mechanism is configured to drive the focus carrier to move in a third direction relative to the image stabilization carrier. The first direction intersects the second direction, and the third direction is perpendicular to the first direction and the second direction.

It may be understood that in some solutions, the image stabilization carrier is located on an inner side of the focus carrier. In this case, when the camera module needs to focus, the focus carrier needs to drive the image stabilization carrier, the lens, and the variable aperture to move in an optical axis direction. In this way, a weight of a moving component formed by the focus carrier, the image stabilization carrier, the lens, and the variable aperture is relatively heavy, and therefore, the focus drive mechanism needs to increase a driving force by increasing a volume. Therefore, such a setting is not conducive to a light-weight and miniaturized design of the motor. In this embodiment, the focus carrier is disposed on the inner side of the image stabilization carrier. In this case, when the camera module needs to focus, the focus carrier needs to drive the lens and the variable aperture to move in a Z-axis direction. In this way, in this embodiment, the image stabilization carrier may be not needed for a moving component in a focusing process, that is, a weight of a moving component formed by the focus carrier, the lens, and the variable aperture is relatively light, thereby facilitating miniaturization of the focus drive mechanism. The motor in this embodiment can implement a light-weight and miniaturized setting.

In addition, in this embodiment, a distance between a connection position between the focus carrier and the image stabilization carrier and the center of gravity of the moving component formed by the focus carrier, the lens, and the variable aperture is relatively short, which helps reduce a risk of overturning the moving component.

It may be understood that, compared with a solution in which the image stabilization carrier is located on the inner side of the focus carrier, the image stabilization carrier needs at least two image stabilization drive mechanisms to push the image stabilization carrier to move on a plane perpendicular to the optical axis direction. In this way, it is also necessary to arrange at least two sets of circuits for the motor to provide a signal and supply power for the image stabilization drive mechanism. In addition, the at least two sets of circuits need to pass through the focus carrier. Therefore, an energizing setting in this solution is relatively complex, and difficulty in disposing the motor is increased. In this embodiment, the focus carrier is disposed on the inner side of the image stabilization carrier. Because the focus carrier needs one set of focus drive mechanism to push the focus carrier to move in the optical axis direction, the motor also needs one set of circuit to provide a signal and supply power for the focus drive mechanism, that is, a quantity of sets of circuits passing through the image stabilization carrier is relatively small. Therefore, an energizing solution of the solution in this embodiment is relatively simple, and can reduce difficulty in disposing the motor to a relatively large extent.

In addition, the focus carrier is disposed on the inner side of the image stabilization carrier, so that the focus coil and the focus magnetic member can be arranged closer to the lens. In this way, when the focus coil and the focus magnetic member are vertically arranged, the focus coil and the focus magnetic member may partially protrude from an upper surface of the motor. It may be understood that the protruding part may be disposed inside a camera decoration member, to better improve space utilization of the camera decoration member.

In a possible embodiment, the image stabilization carrier is frame-shaped, and the image stabilization carrier is disposed around the focus carrier.

In a possible embodiment, the focus drive mechanism includes a focus coil and a focus magnetic member, the focus coil is disposed on the image stabilization carrier, the focus magnetic member is disposed on the focus carrier, and the focus coil faces the focus magnetic member.

In a possible embodiment, the image stabilization carrier is provided with a through hole, and the through hole runs through an outer side surface and an inner side surface of the image stabilization carrier; and the motor includes a focus circuit board, the focus circuit board is fastened on the outer side surface of the image stabilization carrier, and the focus coil is fastened on the focus circuit board and at least partially located in the through hole.

It may be understood that at least a part of the focus coil is disposed in the through hole of the image stabilization carrier, so that structural space of the image stabilization carrier can be used to a relatively large extent, thereby facilitating miniaturization of the motor.

In a possible embodiment, the motor further includes a first focus magnetic conductive member, the first focus magnetic conductive member is fastened on a side that is of the focus circuit board and that is away from the focus coil, and the first focus magnetic conductive member is disposed opposite to the focus magnetic member.

It may be understood that, because the first focus magnetic conductive member is fastened on the image stabilization carrier through the focus circuit board, and the focus magnetic member is fastened on the focus carrier, when the first focus magnetic conductive member and the focus magnetic member generate a magnetic attraction force, the focus carrier is matched more tightly with the image stabilization carrier under an action of the magnetic attraction force. In this way, the focus carrier may be further limited in some directions on the plane perpendicular to the optical axis direction, that is, movement or shaking of the focus carrier in these directions is avoided, thereby ensuring stability of the focus carrier.

In a possible embodiment, the motor further includes a second focus magnetic conductive member and a third focus magnetic conductive member, both the second focus magnetic conductive member and the third focus magnetic conductive member are fastened on the first focus magnetic conductive member, both the second focus magnetic conductive member and the third focus magnetic conductive member protrude relative to a front surface of the first focus magnetic conductive member, and the front surface of the first focus magnetic conductive member faces the focus circuit board; and the center of the focus magnetic member is located between the center of the second focus magnetic conductive member and the center of the third focus magnetic conductive member.

It may be understood that, when the focus magnetic member moves in a positive direction of the Z-axis, a magnetic attraction force between the first focus magnetic conductive member and the focus magnetic member may enable the focus magnetic member to generate a first restoring force in a negative direction of the Z-axis, and a magnetic attraction force between the second focus magnetic conductive member and the focus magnetic member may enable the focus magnetic member to generate a second restoring force in the positive direction of the Z-axis. In this way, the first restoring force and the second restoring force may be approximately offset or completely offset. In this case, stability of the focus carrier in a process of moving in the positive direction of the Z-axis is better.

When the focus magnetic member moves in the negative direction of the Z-axis, the focus magnetic member moves from a first position to a third position. A magnetic attraction force between the first focus magnetic conductive member and the focus magnetic member may enable the focus magnetic member to generate a third restoring force in the positive direction of the Z-axis, and a magnetic attraction force between the third focus magnetic conductive member and the focus magnetic member may enable the focus magnetic member to generate a fourth restoring force in the negative direction of the Z-axis. In this way, the third restoring force and the fourth restoring force may be approximately offset or completely offset. In this case, stability of the focus carrier in a process of moving in the Z-axis direction is better.

In a possible embodiment, the focus carrier is slidably connected to the image stabilization carrier through a first sliding shaft and a second sliding shaft.

It may be understood that, in comparison with a solution in which the focus carrier is connected to the image stabilization carrier by using a ball, the focus carrier and the image stabilization carrier in this embodiment may implement surface contact. In this way, when the focus carrier slides in the Z-axis direction relative to the image stabilization carrier, it can be ensured that the focus carrier and the image stabilization carrier have better stability. In addition, because a contact area between the focus carrier and the image stabilization carrier is relatively large, when the focus carrier or the image stabilization carrier generates pressure on the X-Y plane, the focus carrier or the image stabilization carrier is not easily deformed due to relatively large pressure, thereby improving reliability of the motor to a relatively large extent.

In a possible embodiment, contact positions between the focus carrier and the first sliding shaft include a first contact position and a second contact position, a contact position between the focus carrier and the second sliding shaft includes a third contact position, and the second contact position is disposed closer to a bottom surface of the base than the third contact position; and the first focus magnetic conductive member is disposed closer to the first sliding shaft than the second sliding shaft.

It may be understood that, in this embodiment, the focus magnetic conductive member is disposed close to the first sliding shaft, so that a central position of a magnetic attraction force generated by the focus magnetic conductive member and the focus magnetic member is disposed close to the first sliding shaft. In this way, regardless of whether the focus carrier is overturned by using a first overturning axis as an axis or a second overturning axis as an axis, a vertical distance (that is, an arm of force of the magnetic attraction force) between a central position of the magnetic attraction force and the overturning axis becomes longer. In this case, a moment of the magnetic attraction force increases. The moment of the magnetic attraction force is equal to a product of a magnitude of the magnetic attraction force and the arm of force of the magnetic attraction force. Because the moment of the magnetic attraction force is increased, a capability of the focus carrier to resist overturning due to gravity is increased, that is, the focus carrier moves more stably in the Z-axis direction. The first overturning axis is a connection line between a bottom boundary line of the second contact position and a bottom boundary line of the third contact position. The second overturning axis is a connection line between a top boundary line of the first contact position and a top boundary line of the third contact position.

In a possible embodiment, the motor further includes a first reinforcement plate and a second reinforcement plate, and the first reinforcement plate and the second reinforcement plate are respectively spliced on two sides of the first focus magnetic conductive member; and both the first reinforcement plate and the second reinforcement plate are fastened on the side that is of the focus circuit board and that is away from the focus coil.

It may be understood that the first reinforcement plate and the second reinforcement plate may be configured to improve structural strength of the focus magnetic conductive member.

In a possible embodiment, the motor includes a focus drive chip, and the focus drive chip is fastened on the focus circuit board; the motor includes a plurality of wiring terminals and a plurality of conductive spring pieces, the plurality of wiring terminals are fastened on the base at an interval, and the plurality of conductive spring pieces are fastened on the image stabilization carrier at an interval; and entry ends of the plurality of conductive spring pieces are electrically connected to a plurality of ports of the focus drive chip in a one-to-one correspondence through the focus circuit board, and exit ends of the plurality of conductive spring pieces are electrically connected to the plurality of wiring terminals in a one-to-one correspondence.

It may be understood that, in this embodiment, because the image stabilization carrier may move in any direction of the X-Y plane relative to the base, a distance between the image stabilization carrier and the base changes in an image stabilization process. Therefore, in this embodiment, the conductive spring piece with an elastic force is disposed to connect the wiring terminal of the base to the focus circuit board of the image stabilization carrier, so that when a distance between the image stabilization carrier and the base changes, stretching of the conductive spring piece is used to offset the distance change, to ensure that a circuit is not easily disconnected, that is, improve circuit stability.

In a possible embodiment, the motor includes a plurality of traces, the plurality of traces are embedded on the image stabilization carrier at an interval, and both an entry end and an exit end of each trace are exposed relative to the image stabilization carrier; and the entry ends of the plurality of conductive spring pieces are electrically connected to exit ends of the plurality of traces in a one-to-one correspondence, and the exit ends of the plurality of traces are electrically connected to the plurality of ports of the focus drive chip in a one-to-one correspondence through the focus circuit board.

It may be understood that, the plurality of conductive spring pieces may be electrically connected to the plurality of ports of the focus drive chip in a one-to-one correspondence through the exit ends of the plurality of traces, where the plurality of traces are embedded on the image stabilization carrier at an interval. In this way, a part of a circuit electrically connected between the wiring terminal and the focus drive chip may be embedded in the image stabilization carrier, so that a circuit outside the image stabilization carrier can be more concise.

In a possible embodiment, the motor includes a plurality of conductive springs, and the plurality of conductive springs are fastened on the focus carrier at an interval; and exit ends of the plurality of conductive springs are electrically connected to the plurality of conductive spring pieces in a one-to-one correspondence, and entry ends of the plurality of conductive springs are configured to be electrically connected to a plurality of ports of a drive chip of a variable aperture in a one-to-one correspondence.

It may be understood that in this embodiment, because the focus carrier may move in the Z-axis direction relative to the image stabilization carrier, a distance between the focus carrier and the image stabilization carrier changes in a focusing process. Therefore, in this embodiment, the conductive spring with an elastic force is disposed, to connect the variable aperture of the focus carrier to the conductive spring piece of the image stabilization carrier, so that when the distance between the focus carrier and the image stabilization carrier changes, stretching of the conductive spring is used to offset the distance change, to ensure that a circuit is not easily disconnected, that is, improve circuit stability.

In a possible embodiment, the motor includes a focus drive chip, and the focus drive chip is fastened on the focus circuit board; and the motor includes a first flexible circuit board, and a plurality of ports of the focus drive chip are electrically connected to the first flexible circuit board through the focus circuit board.

It may be understood that, in this embodiment, because the image stabilization carrier may move in any direction of the X-Y plane relative to the base, a distance between the image stabilization carrier and the base changes in an image stabilization process. Therefore, in this embodiment, the first flexible circuit board that is bendable is disposed, to connect the base and the focus circuit board of the image stabilization carrier, so that when the distance between the image stabilization carrier and the base changes, bendability of the first flexible circuit board is used to offset the distance change, to ensure that a circuit is not easily disconnected, that is, improve circuit stability.

In a possible embodiment, the motor further includes a second flexible circuit board, the second flexible circuit board is configured to electrically connect a plurality of ports of a drive chip of a variable aperture to the first flexible circuit board in a one-to-one correspondence through the focus circuit board.

It may be understood that in this embodiment, because the focus carrier may move in the Z-axis direction relative to the image stabilization carrier, a distance between the focus carrier and the image stabilization carrier changes in a focusing process. Therefore, in this embodiment, the second flexible circuit board that is bendable is disposed, so that the variable aperture of the focus carrier is connected to the second flexible circuit board of the image stabilization carrier, so that when the distance between the focus carrier and the image stabilization carrier changes, bendable performance of the second flexible circuit board is used to offset the distance change, to ensure that a circuit is not easily disconnected, that is, improve circuit stability.

In a possible embodiment, the second flexible circuit board includes a first segment, a second segment, and a third segment, the second segment is connected between the first segment and the third segment, the first segment and the third segment are disposed opposite to each other, and the second segment is in a bent shape; and the first segment is configured to be electrically connected to the plurality of ports of the drive chip of the variable aperture, and the third segment is electrically connected to the first flexible circuit board through the focus circuit board.

It may be understood that, the second flexible circuit board is in a top-down bent and folded state, so that when the distance between the focus carrier and the image stabilization carrier changes, the bent and folded state of the second flexible circuit board is used to offset the distance change, to ensure that a circuit is not easily disconnected, that is, improve circuit stability. **In** addition, a very small motion reaction force of the second flexible circuit board may also be implemented.

**In** a possible embodiment, the focus circuit board, the first flexible circuit board, and the second flexible circuit board are of an integrally formed structure.

**In** a possible embodiment, the image stabilization carrier includes a first side portion and a third side portion that are disposed opposite to each other, and a second side portion and a fourth side portion that are disposed opposite to each other, and the second side portion and the fourth side portion are connected between the first side portion and the third side portion;

the image stabilization drive mechanism includes a first image stabilization coil, a first image stabilization magnetic member, a second image stabilization coil, and a second image stabilization magnetic member, the first image stabilization coil is fastened on the base, the first image stabilization magnetic member is fastened on the first side portion, the first image stabilization coil faces the first image stabilization magnetic member, to drive the image stabilization carrier and the focus carrier to move in the first direction relative to the base, the second image stabilization coil is fastened on the base, the second image stabilization magnetic member is fastened on the second side portion, and the second image stabilization coil faces the second image stabilization magnetic member, to drive the image stabilization carrier and the focus carrier to move in the second direction relative to the base; and
the focus coil is fastened on the third side portion, and a part of the first flexible circuit board is located between the fourth side portion and the base.

It may be understood that a part of the first flexible circuit board may alternatively be located between the fourth side portion of the image stabilization carrier and the base, so that the first flexible circuit board is located in magnetic-free space, thereby reducing impact on a magnetic member on the motor.

According to a second aspect, a camera module is provided. The camera module includes a lens, an image sensor, and the foregoing motor. The lens is mounted on the focus carrier, and the image sensor is located on a light exit side of the lens.

**In** a possible embodiment, the camera module further includes a variable aperture, and the variable aperture is located on a light entry side of the lens.

According to a third aspect, an electronic device is provided. The electronic device includes a device housing and the foregoing camera module, and the camera module is disposed in the device housing.

## BRIEF DESCRIPTION OF DRAWINGS

To describe the technical solutions in the embodiments of this application or the background more clearly, the following describes the accompanying drawings for describing the embodiments of this application or the background.

FIG. 1 is a diagram of a structure of an electronic device according to an embodiment of this application;

FIG. 2 is a partial sectional view of the electronic device shown in FIG. 1 at a line A-A according to an embodiment;

FIG. 3 is a diagram of a structure of a camera module shown in FIG. 1 according to an embodiment;

FIG. 4 is a partial exploded diagram of a camera module shown in FIG. 3 according to an embodimente;

FIG. 5 is a partial exploded diagram of a motor shown in FIG. 4 according to an embodiment;

FIG. 6 is a partial exploded view of an image stabilization drive module shown in FIG. 5 according to an embodiment;

FIG. 7 is a partial exploded view of a circuit board assembly shown in FIG. 5 according to an embodiment;

FIG. 8 is a partial diagram of a structure of a motor shown in FIG. 4 according to an embodiment embodiment;

FIG. 9 is a partial diagram of a structure of a motor shown in FIG. 4 at different angles according to an embodiment;

FIG. 10 is a partial diagram of a structure of a motor shown in FIG. 4 according to an embodiment ;

FIG. 11 is a partial diagram of a structure of a focus drive module shown in FIG. 5 according to an embodiment ;

FIG. 12 is a partial diagram of a structure of a motor shown in FIG. 4 according to an embodiment ;

FIG. 13 is a diagram of a structure of a part of the motor in FIG. 12 at another angle;

FIG. 14 is a partial sectional view of a camera module shown in FIG. 3 at a line B-B according to an embodiment;

FIG. 15 is a simplified diagram of a force applied to a focus magnetic conductive member, a focus magnetic member, and a focus carrier that are shown in FIG. 14 and that move in a positive direction of a Z-axis;

FIG. 16 is a simplified diagram of a force applied to a focus magnetic conductive member, a focus magnetic member, and a focus carrier that are shown in FIG. 14 and that move in a negative direction of a Z-axis;

FIG. 17 is a partial exploded diagram of a motor shown in FIG. 4 at an angle according to an embodiment;

FIG. 18 is a partial exploded diagram of a motor shown in FIG. 4 at another angle according to an embodiment;

FIG. 19 is a partial sectional view of a camera module shown in FIG. 3 at a line C-C according to an embodiment;

FIG. 20 is a diagram of a structure of a base shown in FIG. 6 at different angles according to an embodiment;

FIG. 21 is a diagram of a structure of a circuit for electrically connecting a focus drive chip shown in FIG. 5 to an external structure according to an embodiment;

FIG. 22 is a partial diagram of a structure of a motor shown in FIG. 4 according to an embodiment;

FIG. 23 is a partial diagram of a structure of a motor shown in FIG. 4 according to an embodiment;

FIG. 24 is a diagram of a structure of a circuit for electrically connecting a focus drive chip shown in FIG. 5 to an external structure according to another embodiment;

FIG. 25 is a diagram of an electrical connection relationship among a controller of a motor, a focus drive chip, and a drive chip of a variable aperture shown in FIG. 4 according to an embodiment;

FIG. 26 is a partial exploded diagram of a camera module shown in FIG. 3 according to another embodiment;

FIG. 27 is a partial exploded diagram of a motor shown in FIG. 26 according to an embodiment ; and

FIG. 28 is a partial diagram of a structure of a camera module shown in FIG. 3 according to another embodiment.

## DESCRIPTION OF EMBODIMENTS

The following describes embodiments of this application with reference to the accompanying drawings in embodiments of this application.

In the descriptions of embodiments of this application, it should be noted that terms "mounting" and "connection" should be understood in a broad sense unless there is a clear stipulation and limitation. For example, "connection" may be a detachable connection, a nondetachable connection, a direct connection, or an indirect connection through an intermediate medium. A "fixed connection" means that two parts are connected to each other and a relative position relationship remains unchanged after the two parts are connected. "Slidable connection" means that two parties are connected to each other and can slide relative to each other after the two parties are connected to each other. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two. A and/or B include three solutions, which are specifically a solution A, a solution B, and a solution AB.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

In addition, in the embodiments of this application, a mathematical concept such as parallel, vertical, or the like is mentioned. These limitations are all for the current process level, but not for an absolute strict definition in the mathematical sense. A small deviation is allowed, which can be approximately parallel or vertical. For example, that A is parallel to B means that A is parallel or approximately parallel to B, and an included angle of 0 degrees to 10 degrees between A and B is allowed. For example, that A is vertical to B means that A is vertical or approximately vertical to B, and an included angle of 80 degrees to 100 degrees between A and B is allowed.

It may be understood that the specific embodiments described herein are merely used to explain a related invention, but not a limitation on the invention. In addition, it should be further noted that, for ease of description, only a part related to the invention is shown in the accompanying drawings.

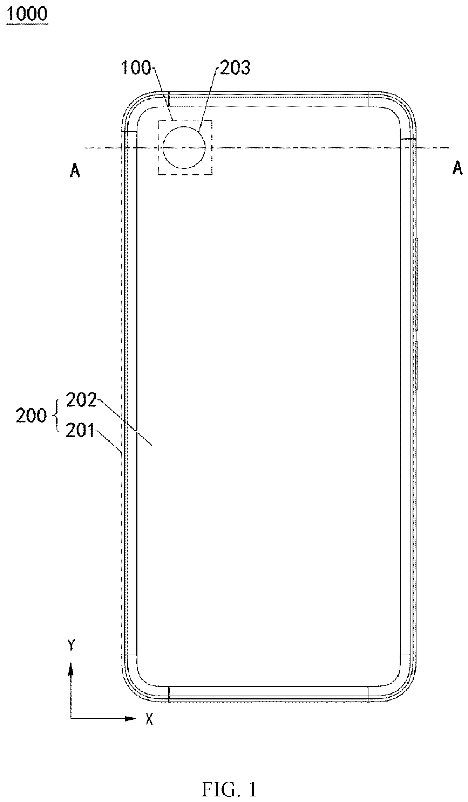

FIG. 1 is a diagram of a structure of an electronic device 1000 according to an embodiment of this application.

As shown in FIG. 1, the electronic device 1000 may be a device with a camera function, such as a mobile phone, a tablet personal computer (tablet personal computer), a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, or a VR helmet. The electronic device 1000 in the embodiment shown in FIG. 1 is described by using the mobile phone as an example.

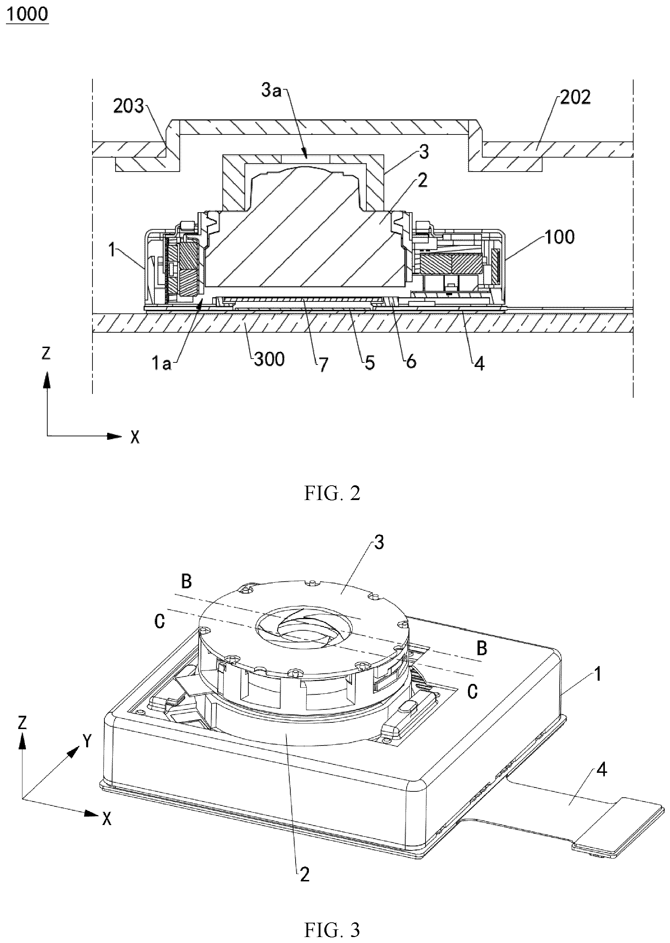

FIG. 2 is a partial sectional view of the electronic device 1000 shown in FIG. 1 at a line A-A according to an embodiment.

As shown in FIG. 1 and FIG. 2, the electronic device 1000 may include a camera module 100, a device housing 200, and a screen 300. The camera module 100 may be a rear-facing camera module, or may be a front-facing camera module. It should be noted that FIG. 1 and the following related accompanying drawings only schematically show some components included in the electronic device 1000. Actual shapes, actual sizes, actual positions, and actual structures of these components are not limited by FIG. 1 and the following accompanying drawings. In addition, when the electronic device 1000 is a device in another form, the electronic device 1000 may not include the screen 300.

For ease of description, a width direction of the electronic device 1000 is defined as an X-axis. A length direction of the electronic device 1000 is a Y-axis. A thickness direction of the electronic device 1000 is a Z-axis. It may be understood that a coordinate system of the electronic device 1000 may be flexibly set according to a specific actual requirement. In this embodiment, description is provided by using an example in which an X-axis direction is a first direction, a Y-axis direction is a second direction, and a Z-axis direction is a third direction.

As shown in FIG. 1 and FIG. 2, the device housing 200 may include a frame 201 and a rear cover 202. The rear cover 202 is fastened to the frame 201. For example, the rear cover 202 may be fastened to the frame 201 by using adhesive. The rear cover 202 and the frame 201 may alternatively be of an integrally formed structure, that is, the rear cover 202 and the frame 201 are of one integral structure.

In an embodiment, the screen 300 may be located on a side that is of the frame 201 and that is away from the rear cover 202. In this case, the screen 300 and the rear cover 202 may be respectively located on two sides of the frame 201. The screen 300, the frame 201, and the rear cover 202 jointly enclose an interior of the electronic device 1000. The interior of the electronic device 1000 may be configured to place a component of the electronic device 1000, for example, a battery, a telephone receiver, or a microphone. The screen 300 may be a flat screen, or may be a curved screen.

For example, the camera module 100 may be located in the interior of the electronic device 1000. The camera module 100 may be located on a side that is of the screen 300 and that faces the rear cover 202. The rear cover 202 may be provided with a light transmission hole 203. A shape of the light transmission hole 203 is not limited to a circle shown in FIG. 1. The light transmission hole 203 connects the interior of the electronic device 1000 to an exterior of the electronic device 1000. Light from the exterior of the electronic device 1000 may enter the interior of the electronic device 1000 through the light transmission hole 203. The camera module 100 may collect light that enters the interior of the electronic device 1000.

For example, the camera module 100 may be a common camera module (that is, an optical axis direction of the camera module 100 is the Z-axis direction). In some embodiments, the camera module 100 may alternatively be a periscope camera module (that is, the optical axis direction of the camera module 100 is any direction on an X-Y plane). It may be understood that the camera module 100 in this embodiment is described by using an example of a common camera module.

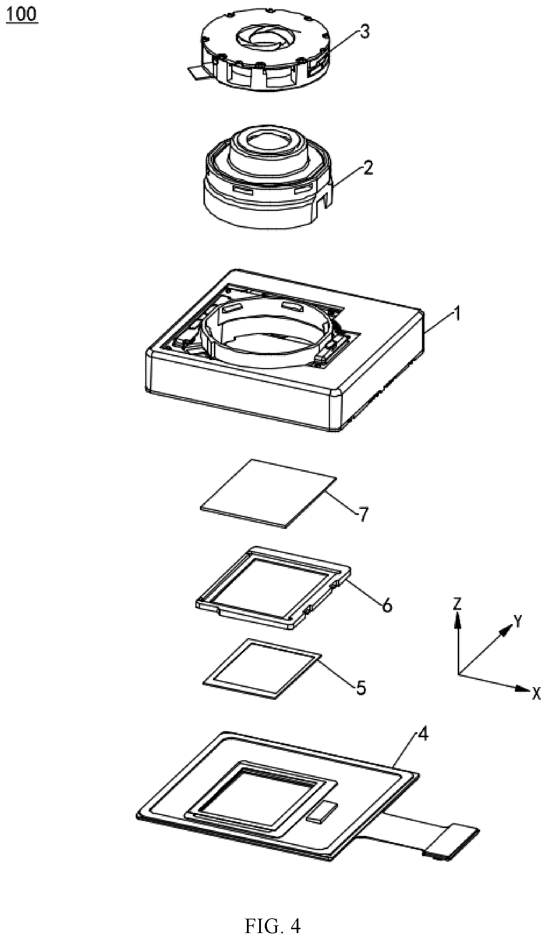

FIG. 3 is a diagram of a structure of the camera module 100 shown in FIG. 1 according to an embodiment. FIG. 4 is a partial exploded diagram of the camera module 100 shown in FIG. 3 according to an embodiment.

As shown in FIG. 3 and FIG. 4, the camera module 100 may include a motor 1, a lens 2, a variable aperture 3, a module circuit board 4, an image sensor 5, a light filter holder 6, and a light filter 7. It may be understood that the image sensor 5 is also referred to as a light sensitive chip or a light sensitive element. The image sensor 5 is configured to collect ambient light, and convert image information carried in the ambient light into an electrical signal. For example, an optical axis direction of the lens 2 is a same direction as an optical axis direction of the camera module 100.

It may be understood that the optical axis direction of the camera module 100, an optical axis direction of the motor 1, and the optical axis direction of the lens 2 all are a same direction. In addition, for ease of description, the X-axis direction is defined as a width direction of the camera module 100, the Y-axis direction is defined as a length direction of the camera module 100, and the Z-axis direction is defined as the optical axis direction of the camera module 100. In another embodiment, a coordinate system of the camera module 100 may be flexibly set according to a specific actual requirement.

For example, the lens 2 may be mounted on the motor 1. Mounting positions and manners of the lens 2 and the motor 1 are specifically described below with reference to related accompanying drawings. Details are not described herein.

It may be understood that the motor 1 may control movement of the lens 2 in the Z-axis direction, to implement auto focus (auto focus, AF). In addition, the motor 1 may further control the lens 2 to move along a plane (that is, the X-Y plane) perpendicular to the optical axis. In this way, when the camera module 100 collects ambient light, if the electronic device 1000 experiences shaking on the X-Y plane due to an external force, the motor 1 may control movement of the lens 2 on the X-Y plane, to cancel a shake stroke generated by the lens 2 on the X-Y plane, to avoid or reduce a position offset caused by shaking of the lens 2. In other words, the camera module 100 in this application may control movement of the lens 2 on the X-Y plane by using the motor 1, to implement optical image stabilization (optical image stabilization, OIS) of the camera module 100, and improve imaging quality of the camera module 100.

For example, the variable aperture 3 may be located on a light entry side of the lens 2. The variable aperture 3 has an aperture hole 3a. A size of the aperture hole 3a may be automatically adjusted. Light may enter the lens 2 through the aperture hole 3a of the variable aperture 3.

As shown in FIG. 2, in an embodiment, the image sensor 5 is fastened to the module circuit board 4, and is electrically connected to the module circuit board 4. In this case, signals may be mutually transmitted between the image sensor 5 and the module circuit board 4. The light filter holder 6 is fastened to the module circuit board 4. The light filter holder 6 and the image sensor 5 are located on a same side of the module circuit board 4. The light filter holder 6 is provided with a light transmission hole 6a. The light filter 7 is fastened to the light filter holder 6. The light filter 7 may be located in the light transmission hole 6a. The light filter 7 is further disposed opposite to the image sensor 5. The light filter 7 may be configured to filter infrared light, blue light, or the like in light before entering the image sensor 5, to ensure that the image sensor 5 has high imaging quality.

As shown in FIG. 2, in an embodiment, the motor 1 is fastened on the module circuit board 4, and is located on a same side of the module circuit board 4 as the image sensor 5. In the Z-axis direction, the image sensor 5, the light filter 7, the lens 2, and the variable aperture 3 are sequentially arranged. In this case, the image sensor 5 is located on a light exit side of the lens 2. The light filter 7 is located between the lens 2 and the image sensor 5.

It may be understood that, in comparison with a solution in which the motor 1 is fastened to the light filter holder 6, in this embodiment, the motor 1 is fastened on the module circuit board 4, so that stacking of the motor 1 and the light filter holder 6 in the Z-axis direction can be avoided, that is, the motor 1 and the light filter holder 6 may be disposed in a staggered manner on the X-Y plane, thereby reducing a height of the camera module 100 to a relatively large extent.

As shown in FIG. 2, in an embodiment, the motor 1 has an avoidance hole 1a. A part of the light filter holder 6 may pass through the avoidance hole 1a, and enter an interior of the motor 1. In this case, the part of the light filter holder 6 is located in the interior of the motor 1. In this way, in the Z-axis direction, there is an overlapping region between the light filter holder 6 and the motor 1, so that the height of the camera module 100 can be reduced to a relatively large extent.

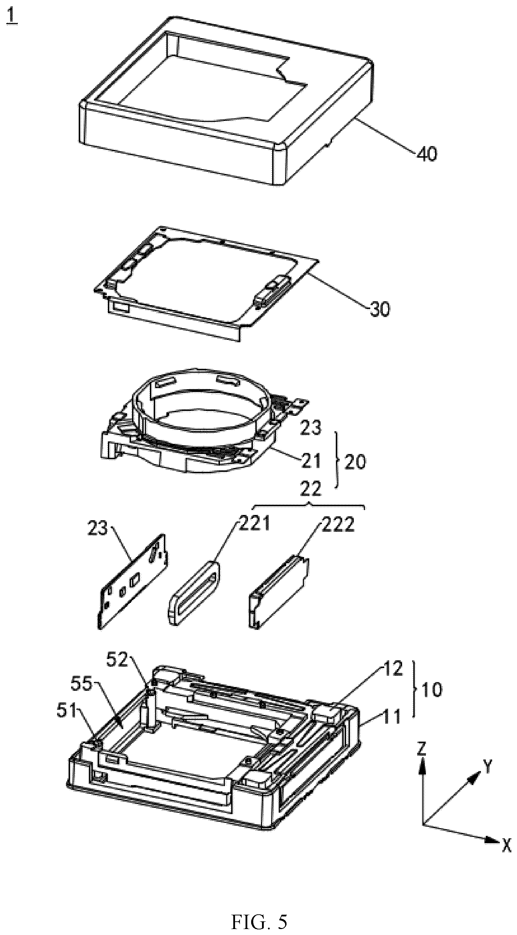

FIG. 5 is a partial exploded diagram of the motor 1 shown in FIG. 4 according to an embodiment.

As shown in FIG. 5, in an embodiment, the motor 1 includes an image stabilization drive module 10, a focus drive module 20, a limiting bracket 30, and a housing 40. It may be understood that the focus drive module 20 is disposed on the image stabilization drive module 10, so that the image stabilization drive module 10 and the focus drive module 20 form an integrated motor, namely, the motor 1. In this way, compared with a split-type motor in which the image stabilization drive module 10 and the focus drive module 20 are separately disposed, a volume of the motor 1 in this embodiment is smaller, and this helps implement miniaturization of the motor 1, thereby helping save internal space of the electronic device 1000.

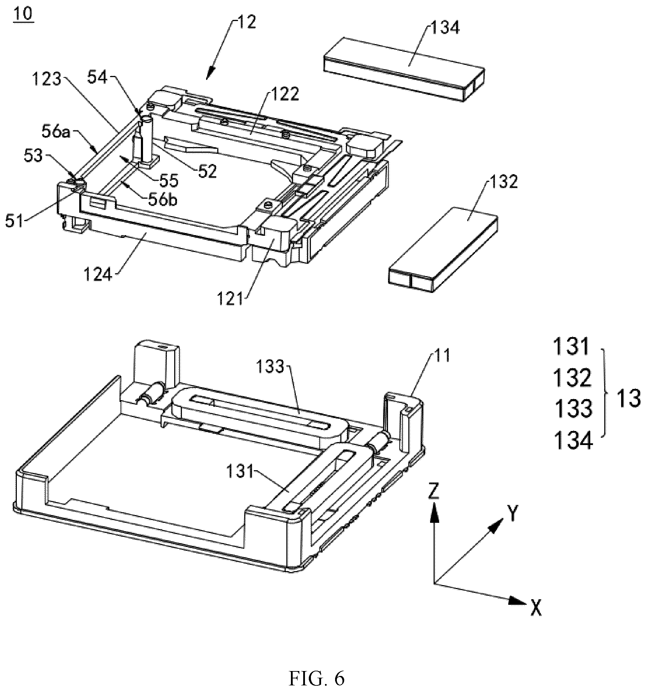

FIG. 6 is a partial exploded view of the image stabilization drive module 10 shown in FIG. 5 according to an embodiment.

As shown in FIG. 5 and FIG. 6, in an embodiment, the image stabilization drive module 10 includes a base 11, an image stabilization carrier 12, and an image stabilization drive mechanism 13. The image stabilization carrier 12 is movably connected to the base 11. The image stabilization carrier 12 may move in the X-axis direction and/or the Y-axis direction relative to the base 11. The base 11 may be fastened on the module circuit board 4 (referring to FIG. 4). In this case, a position of the base 11 relative to the module circuit board 4 remains unchanged. The base 11 may also be referred to as an image stabilization fixing component. The image stabilization carrier 12 is movably connected to the base 11, and the image stabilization carrier 12 may also be referred to as an image stabilization moving component.

For example, the image stabilization carrier 12 is frame-shaped. The image stabilization carrier 12 includes a first side portion 121 and a third side portion 123 that are disposed opposite to each other, and a second side portion 122 and a fourth side portion 124 that are disposed opposite to each other. The second side portion 122 and the fourth side portion 124 are connected between the first side portion 121 and the third side portion 123.

For example, the image stabilization drive mechanism 13 includes a first image stabilization coil 131, a first image stabilization magnetic member 132, a second image stabilization coil 133, and a second image stabilization magnetic member 134. The first image stabilization coil 131 is fastened on the base 11. The first image stabilization magnetic member 132 is fastened on the first side portion 121 of the image stabilization carrier 12. The first image stabilization coil 131 faces the first image stabilization magnetic member 132, and is configured to drive the image stabilization carrier 12 to move in the X-axis direction relative to the base 11. The second image stabilization coil 133 is fastened on the base 11. The second image stabilization magnetic member 134 is fastened on the second side portion 122. The second image stabilization coil 133 faces the second image stabilization magnetic member 134, and is configured to drive the image stabilization carrier 12 to move in the Y-axis direction relative to the base 11.

In another embodiment, the image stabilization drive mechanism 13 may alternatively be another drive mechanism. This is not specifically limited in this application.

As shown in FIG. 6, for example, the image stabilization carrier 12 has a first sliding shaft 51 and a second sliding shaft 52. A first groove 53 and a second groove 54 may be disposed on the image stabilization carrier 12. In this case, the first sliding shaft 51 is then fastened in the first groove 53 through glue dispensing or welding, and a part of an outer surface of the first sliding shaft 51 is exposed relative to the first groove 53. In addition, the second sliding shaft 52 is fastened in the second groove 54 through glue dispensing or welding, and a part of an outer surface of the second sliding shaft 52 is exposed relative to the second groove 54. In another embodiment, the first sliding shaft 51 and the second sliding shaft 52 each may alternatively be a part of the image stabilization carrier 12 being an integrated mechanical member.

As shown in FIG. 5 and FIG. 6, a through hole 55 is disposed on the third side portion 123 of the image stabilization carrier 12. The through hole 55 runs through an inner surface 56a and an outer surface 56b of the image stabilization carrier 12.

As shown in FIG. 5, the focus drive module 20 includes a focus carrier 21, a focus drive mechanism 22, and a circuit board assembly 23. For example, the focus drive mechanism 22 includes a focus coil 221 and a focus magnetic member 222. The focus magnetic member 222 may be a magnet or another magnetic component.

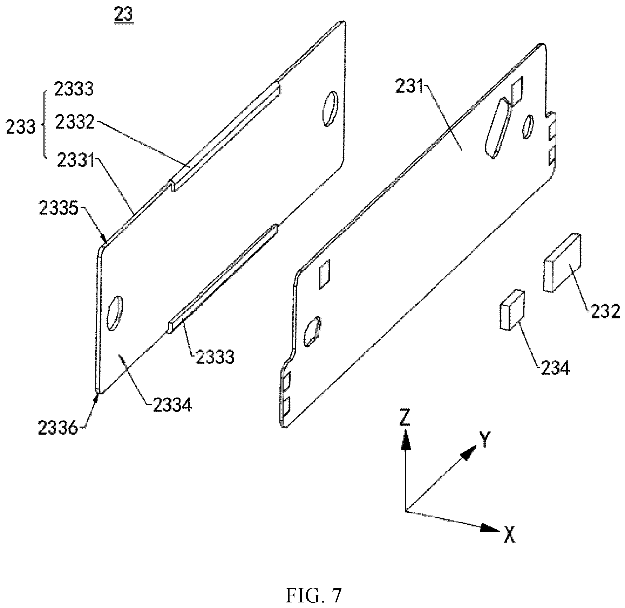

FIG. 7 is a partial exploded view of the circuit board assembly 23 shown in FIG. 5 according to an embodiment.

As shown in FIG. 5 and FIG. 7, the circuit board assembly 23 includes a focus circuit board 231, a focus drive chip 232, a focus magnetic conductive member 233, and a focus sensor 234. In another embodiment, the circuit board assembly 23 may not include the focus magnetic conductive member 233 and the focus sensor 234.

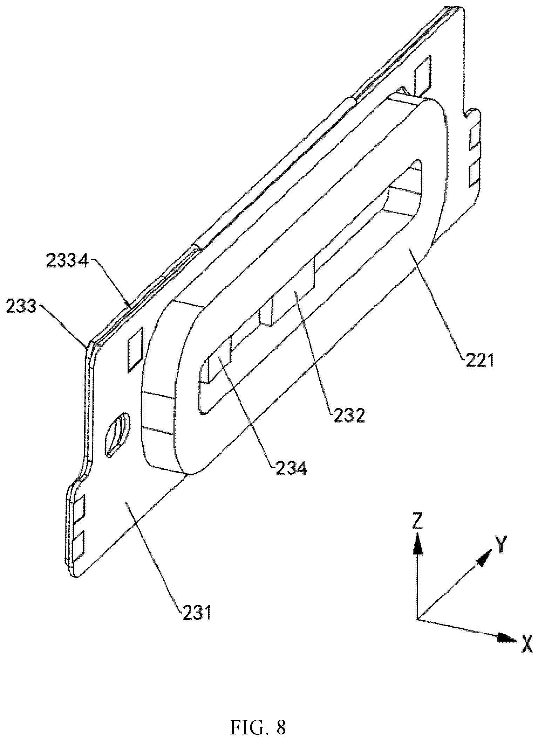

FIG. 8 is a partial diagram of a structure of the motor 1 shown in FIG. 4 according to an embodiment. For example, FIG. 8 may be an assembly diagram of the circuit board assembly 23 and the focus coil 221 according to an embodiment.

As shown in FIG. 7 and FIG. 8, for example, both the focus drive chip 232 and the focus sensor 234 are fastened on the focus circuit board 231, and are electrically connected to the focus circuit board 231.

As shown in FIG. 7 and FIG. 8, for example, the focus coil 221 is fastened on the focus circuit board 231, and is electrically connected to the focus circuit board 231. It may be understood that an input terminal and an output terminal of the focus coil 221 may form a current loop with the focus drive chip 232 through the focus circuit board 231. In this case, the focus drive chip 232 may control a current status of the focus coil 221 (for example, whether a current is connected or a current value when the focus coil 221 is energized) through the focus circuit board 231.

For example, the focus coil 221 may be disposed around the focus drive chip 232 and the focus sensor 234. **In** this way, the focus drive chip 232 and the focus sensor 234 can effectively use inner space of the focus coil 221, thereby improving space utilization of the motor 1 to a relatively large extent.

It may be understood that, in another embodiment, the focus coil 221 may alternatively be a part of the circuit board assembly 23. **In** this way, when the circuit board assembly 23 is sold as a selling unit, the focus coil 221 may also be sold as a part of the circuit board assembly 23.

As shown in FIG. 7, the focus magnetic conductive member 233 includes a first focus magnetic conductive member 2331, a second focus magnetic conductive member 2332, and a third focus magnetic conductive member 2333.

For example, the first focus magnetic conductive member 2331 includes a front surface 2334 and a top surface 2335 and a bottom surface 2336 that are disposed back to back. The front surface 2334 is connected between the top surface 2335 and the bottom surface 2336.

In an embodiment, the second focus magnetic conductive member 2332 is fastened to the top surface 2335 of the first focus magnetic conductive member 2331. A part of the second focus magnetic conductive member 2332 protrudes relative to the front surface 2334 of the first focus magnetic conductive member 2331. The third focus magnetic conductive member 2333 is fastened to the bottom surface 2336 of the first focus magnetic conductive member 2331. A part of the third focus magnetic conductive member 2333 protrudes relative to the front surface 2334 of the first focus magnetic conductive member 2331. In this way, in the Z-axis direction, the second focus magnetic conductive member 2332 and the third focus magnetic conductive member 2333 may be fastened to the first focus magnetic conductive member 2331 at an interval, and both protrude from one side of the first focus magnetic conductive member 2331. It may be understood that the second focus magnetic conductive member 2332 may be fastened to the first focus magnetic conductive member 2331 in a bending manner (a bending angle is not limited), or may be fastened to the first focus magnetic conductive member 2331 in a non-bending manner. In addition, the second focus magnetic conductive member 2332 and the first focus magnetic conductive member 2331 may be of an integrally formed structure. The second focus magnetic conductive member 2332 may alternatively be fastened to the first focus magnetic conductive member 2331 in a manner of bonding, welding, or the like. For a manner of connecting the third focus magnetic conductive member 2333 and the first focus magnetic conductive member 2331, refer to a manner of connecting the second focus magnetic conductive member 2332 and the first focus magnetic conductive member 2331. Details are not described herein again.

In another embodiment, the second focus magnetic conductive member 2332 and the third focus magnetic conductive member 2333 may alternatively be fastened to the front surface 2334 of the first focus magnetic conductive member 2331 at an interval.

In another embodiment, the focus magnetic conductive member 233 may not include the second focus magnetic conductive member 2332 and the third focus magnetic conductive member 2333.

As shown in FIG. 8, the focus magnetic conductive member 233 is fastened on a side that is of the focus circuit board 231 and that is away from the focus coil 221.

For example, the front surface 2334 of the first focus magnetic conductive member 2331 is fastened to a surface that is of the focus circuit board 231 and that is away from the focus coil 221.

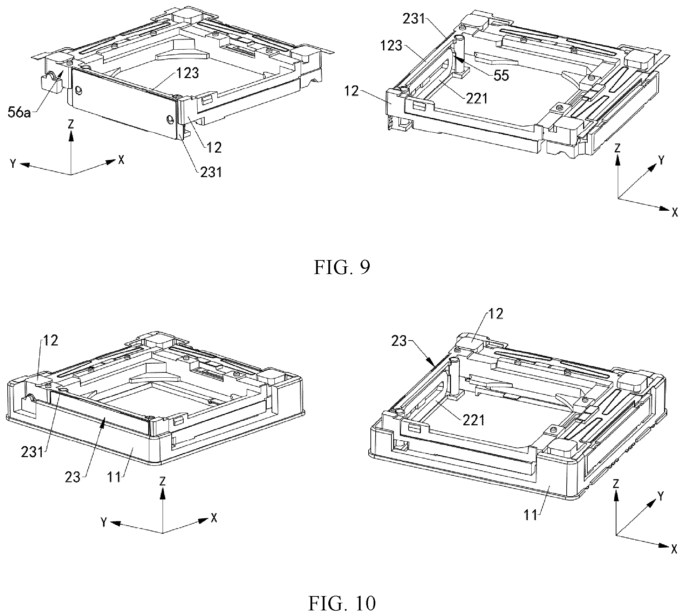

FIG. 9 is a partial diagram of a structure of the motor 1 shown in FIG. 4 at different angles according to an embodiment. For example, FIG. 9 may be an assembly diagram of the image stabilization carrier 12, the circuit board assembly 23, and the focus coil 221.

As shown in FIG. 9, the focus circuit board 231 is fastened on the image stabilization carrier 12. In this case, the focus coil 221 may be fastened on the image stabilization carrier 12 through the focus circuit board 231. For example, the focus circuit board 231 is fastened on an outer side surface 56a of the image stabilization carrier 12, and is located on the third side portion 123 of the image stabilization carrier 12.

For example, the focus circuit board 231 is fastened on the outer side surface of the image stabilization carrier 12. At least a part of the focus coil 221 may be located in the through hole 55 of the image stabilization carrier 12. It may be understood that at least a part of the focus coil 221 is disposed in the through hole 55 of the image stabilization carrier 12, so that structural space of the image stabilization carrier 12 can be used to a relatively large extent, thereby facilitating miniaturization of the motor 1.

In this embodiment, a plane wound by a conducting wire of the focus coil 221 may be parallel to the optical axis direction. In this case, the focus coil 221 is vertically arranged, so that the focus coil 221 may occupy a relatively small area on the X-Y plane, thereby facilitating miniaturization of the motor 1.

FIG. 10 is a partial diagram of a structure of the motor 1 shown in FIG. 4 according to an embodiment. For example, FIG. 10 may be an assembly diagram of the base 11, the image stabilization carrier 12, the circuit board assembly 23, and the focus coil 221.

As shown in FIG. 10, when the focus circuit board 231 is fastened on the image stabilization carrier 12, the focus circuit board 231 may be located between the image stabilization carrier 12 and the base 11. It may be understood that, when the image stabilization carrier 12 moves in the X-Y plane relative to the base 11, the image stabilization carrier 12 may drive the circuit board assembly 23 and the focus coil 221 to move in the X-Y plane.

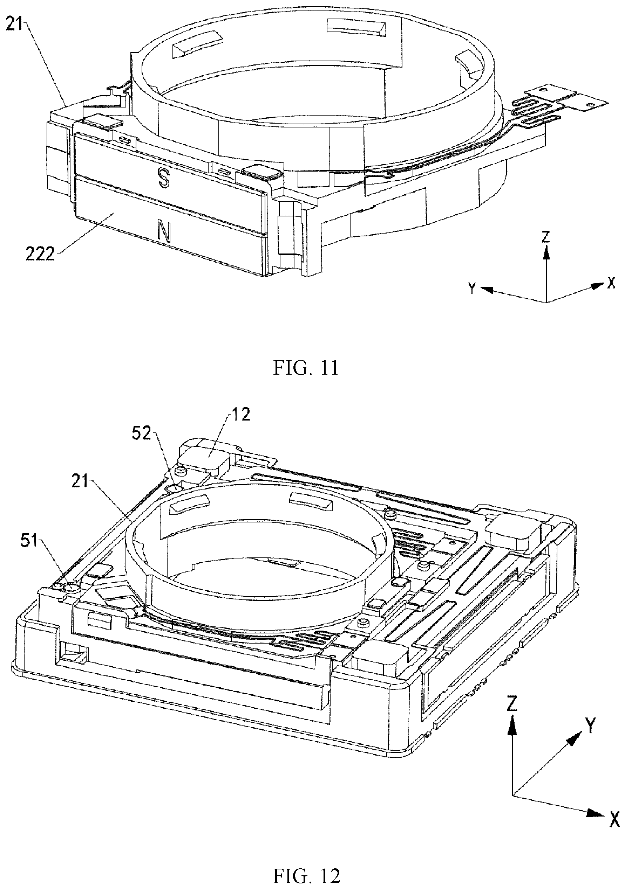

FIG. 11 is a partial diagram of a structure of the focus drive module 20 shown in FIG. 5 according to an embodiment . For example, FIG. 11 may be an assembly diagram of the focus carrier 21 and the focus magnetic member 222.

As shown in FIG. 11, the focus magnetic member 222 is fastened on the focus carrier 21. A polarity direction of the focus magnetic member 222 may be parallel to the optical axis direction. In this case, the focus magnetic member 222 may be arranged vertically, to reduce space occupied by the focus magnetic member 222 on the X-Y plane. It may be understood that the polarity direction of the focus magnetic member 222 may be a direction from a north pole of the focus magnetic member 222 to a south pole, or a direction from a south pole to a north pole. In this embodiment, description is provided by using an example in which the direction from the north pole of the focus magnetic member 222 to the south pole is the polarity direction of the focus magnetic member 222.

For example, the focus magnetic member 222 may be fastened on the focus carrier 21 in a manner of using adhesive or the like.

For example, a groove may be disposed on the focus carrier 21. Then, the focus magnetic member 222 is disposed in the groove. In this way, a structure formed by the focus magnetic member 222 and the focus carrier 21 has relatively good integrity; and the focus magnetic member 222 may use structural space of the focus carrier 21, and the focus magnetic member 222 does not increase a size of the focus drive module to a relatively large extent. In another embodiment, the focus magnetic member 222 may be embedded in the focus carrier 21 by using an injection molding processing process.

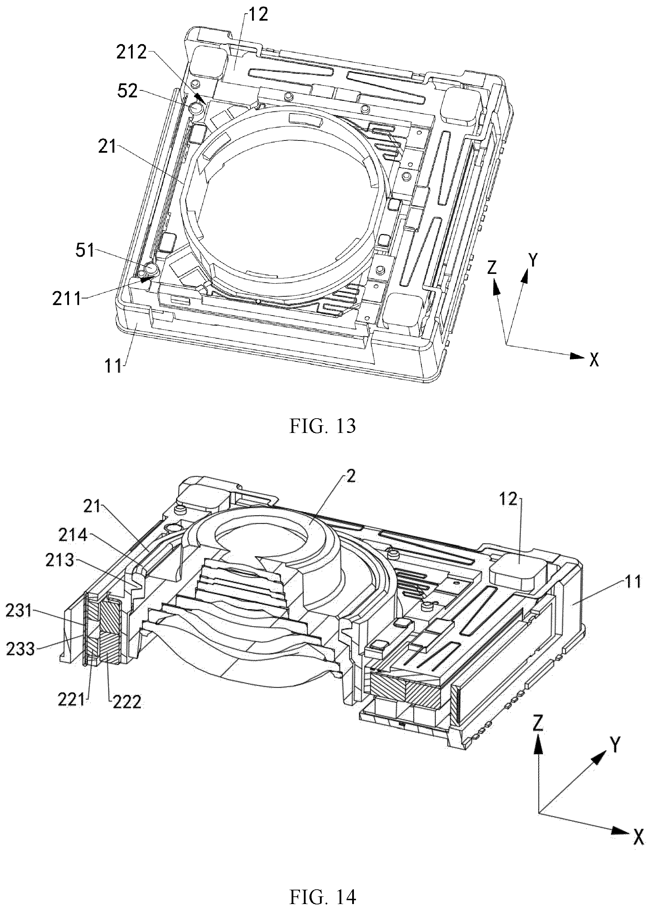

FIG. 12 is a partial diagram of a structure of the motor 1 shown in FIG. 4 according to an embodiment . FIG. 13 is a diagram of a structure of a part of the motor 1 in FIG. 12 at another angle. For example, FIG. 12 may be an assembly diagram of structures such as the focus carrier 21 and the image stabilization carrier 12.

As shown in FIG. 12 and FIG. 13, the focus carrier 21 is located on an inner side of the image stabilization carrier 12. It may be understood that when the focus carrier 21 is located on the inner side of the image stabilization carrier 12, the image stabilization carrier 12 may be disposed around the focus carrier 21. The image stabilization carrier 12 may be disposed around the focus carrier 21 by one circle, or a part of the image stabilization carrier 12 may be disposed around the focus carrier 21. In this embodiment, the image stabilization carrier 12 is frame-shaped. In this case, the image stabilization carrier 12 is disposed around the focus carrier 21.

It may be understood that in some solutions, the image stabilization carrier is located on an inner side of the focus carrier. In this case, when the camera module needs to focus, the focus carrier needs to drive the image stabilization carrier, the lens, and the variable aperture to move in the Z-axis direction. In this way, a weight of a moving component formed by the focus carrier, the image stabilization carrier, the lens, and the variable aperture is relatively heavy, and therefore, the focus drive mechanism needs to increase a driving force by increasing a volume. Therefore, such a setting is not conducive to a light-weight and miniaturized design of the motor. In this embodiment, the focus carrier 21 is disposed on the inner side of the image stabilization carrier 12. In this case, when the camera module 100 needs to focus, the focus carrier 21 needs to drive the lens 2 and the variable aperture 3 to move in the Z-axis direction. In this way, in this embodiment, the image stabilization carrier may be not needed for the moving component in a focusing process, that is, a weight of a moving component formed by the focus carrier 21, the lens 2, and the variable aperture 3 is relatively light, thereby facilitating miniaturization of the focus drive mechanism 22. The motor 1 in this embodiment can implement a light-weight and miniaturized setting.

In addition, in this embodiment, a distance between a connection position between the focus carrier 21 and the image stabilization carrier and the center of gravity of the moving component formed by the focus carrier 21, the lens 2, and the variable aperture 3 is relatively short, which helps reduce a risk of overturning the moving component.

It may be understood that, compared with a solution in which the image stabilization carrier is located on the inner side of the focus carrier, the image stabilization carrier needs at least two image stabilization drive mechanisms to push the image stabilization carrier to move on the X-Y plane. In this way, it is also necessary to arrange at least two sets of circuits for the motor to provide a signal and supply power for the image stabilization drive mechanism. In addition, the at least two sets of circuits need to pass through the focus carrier. Therefore, an energizing setting in this solution is relatively complex, and difficulty in disposing the motor is increased. In this embodiment, the focus carrier 21 is disposed on the inner side of the image stabilization carrier 12. Because the focus carrier 21 needs one set of focus drive mechanism 22 to push the focus carrier 21 to move in the Z-axis direction, the motor 1 also needs one set of circuit to provide a signal and supply power for the focus drive mechanism 22, that is, one set of circuit needs to pass through the image stabilization carrier 12. Therefore, an energizing solution of the solution in this embodiment is relatively simple, and can reduce difficulty in disposing the motor 1 to a relatively large extent.

In addition, the focus carrier 21 is disposed on the inner side of the image stabilization carrier 12, so that the focus coil and the focus magnetic member can be arranged closer to the lens. In this way, when the focus coil and the focus magnetic member are vertically arranged, the focus coil and the focus magnetic member may partially protrude from an upper surface of the motor 1. It may be understood that the protruding part may be disposed inside a camera decoration member, to better improve space utilization of the camera decoration member.

As shown in FIG. 12 and FIG. 13, the focus carrier 21 is slidably connected to the image stabilization carrier 12 in the Z-axis direction. In this way, the focus carrier 21 may move in the Z-axis direction relative to the image stabilization carrier 12, that is, the focus carrier 21 may move in the Z-axis direction relative to the base 11.

It may be understood that, because the image stabilization carrier 12 may move in the X-Y plane relative to the base 11, the focus carrier 21 is slidably connected to the image stabilization carrier 12 in the Z-axis direction, so that when the image stabilization carrier 12 moves in the X-Y plane relative to the base 11, the image stabilization carrier 12 may also drive the focus carrier 21 to move in the X-Y plane relative to the base 11.

In an embodiment, the focus carrier 21 is slidably connected to the image stabilization carrier 12 in the Z-axis direction through the first sliding shaft 51 and the second sliding shaft 52.

It may be understood that, in comparison with a solution in which the focus carrier 21 is connected to the image stabilization carrier 12 by using a ball, the focus carrier 21 and the image stabilization carrier 12 in this embodiment may implement surface contact. In this way, when the focus carrier 21 slides in the Z-axis direction relative to the image stabilization carrier 12, it can be ensured that the focus carrier 21 and the image stabilization carrier 12 have better stability. In addition, because a contact area between the focus carrier 21 and the image stabilization carrier 12 is relatively large, when the focus carrier 21 or the image stabilization carrier 12 generates pressure on the X-Y plane, the focus carrier 21 or the image stabilization carrier 12 is not easily deformed due to relatively large pressure, thereby improving reliability of the motor 1 to a relatively large extent.

In another embodiment, the focus carrier 21 may alternatively be connected to the image stabilization carrier 12 in the Z-axis direction in a manner of using a ball.

As shown in FIG. 12 and FIG. 13, according to an embodiment e, the focus carrier 21 is provided with a first sliding slot 211 and a second sliding slot 212 that are disposed at an interval. A part of the first sliding shaft 51 is disposed in the first sliding slot 211. A part of the second sliding shaft 52 is disposed in the second sliding slot 212.

It may be understood that, through cooperation between the first sliding shaft 51 and the first sliding slot 211 and cooperation between the second sliding shaft 52 and the second sliding slot 212, limiting of the focus carrier 21 in some directions on the X-Y plane is implemented, that is, movement of the focus carrier 21 in these directions is avoided, thereby ensuring stability of the focus carrier 21.

In an embodiment, the first sliding shaft 51 may be tightly matched with the focus carrier 21. The second sliding shaft 52 may be loosely matched with the focus carrier 21. For example, the first sliding slot 211 is set to be in a "V" shape. The second sliding slot 212 is in an "L" shape, a "U" shape, or the like. In this way, the first sliding shaft 51 is wrapped by using the first sliding slot 211 in the "V" shape. It may be understood that, the first sliding shaft 51 is tightly matched with the focus carrier 21, and the second sliding shaft 52 is loosely matched with the focus carrier 21, so that difficulty in assembling the focus carrier 21 and the image stabilization carrier 12 can be reduced.

In another embodiment, the focus carrier 21 may alternatively be connected to the first sliding shaft 51 and the second sliding shaft 52 in another manner. For example, a first via hole and a second via hole are disposed on the focus carrier 21. Then, the first sliding shaft 51 and the second sliding shaft 52 are respectively sleeved on the first via hole and the second via hole.

FIG. 14 is a partial sectional view of the camera module 100 shown in FIG. 3 at a line B-B according to an embodiment.

As shown in FIG. 14, the lens 2 is mounted on the focus carrier 21. In this way, when the focus carrier 21 moves in the Z-axis direction relative to the image stabilization carrier 12, the focus carrier 21 may drive the lens 2 to move in the Z-axis direction. In this case, the camera module 100 may implement auto focus (auto focus, AF). In addition, because the image stabilization carrier 12 may also drive the focus carrier 21 to move in the X-Y plane relative to the base 11, the focus carrier 21 may drive the lens 2 to move in the X-Y plane relative to the base 11. In this case, the camera module 100 may implement optical image stabilization (optical image stabilization, OIS), thereby improving imaging quality of the camera module 100.

In an embodiment, the inner side of the focus carrier 21 may have a protrusion 213. When the lens 2 is mounted on the focus carrier 21, the protrusion 213 may be disposed opposite to a part of a structure of a lens cone of the lens 2. In this way, an adhesive layer 214 is disposed between the protrusion 213 and the lens cone of the lens 2, so that the lens 2 is stably fastened to the focus carrier 21. In addition, the protrusion 213 and the adhesive layer 214 may alternatively form an interlocking structure, thereby further improving connection stability between the focus carrier 21 and the lens 2.

As shown in FIG. 14, when the focus carrier 21 is disposed on the image stabilization carrier 12, the focus coil 221 faces the focus magnetic member 222. For example, the plane wound by the conducting wire of the focus coil 221 may be parallel to the polarity direction of the focus magnetic member 222.

It may be understood that, when the focus coil 221 is energized, the focus coil 221 and the focus magnetic member 222 may generate forces that interact with each other. In this way, when the focus magnetic member 222 is subject to an acting force, the focus carrier 21 may move in the Z-axis direction relative to the image stabilization carrier 12 under the acting force.

It may be understood that a magnetic pole position of the focus magnetic member 222 (that is, the south pole of the focus magnetic member 222 is close to the focus coil 221, or the north pole of the focus magnetic member 222 is close to the focus coil 221) or a direction of a current signal on the focus coil 221 is changed, to change a force-bearing direction of the focus magnetic member 222, and change a movement direction of the focus carrier 21 (for example, move in a positive direction of the Z-axis, or move in a negative direction of the Z-axis).

As shown in FIG. 14, the focus magnetic conductive member 233 faces the focus magnetic member 222. The focus magnetic conductive member 233 is configured to generate a magnetic attraction force with the focus magnetic member 222. It may be understood that, because the focus magnetic conductive member 233 is fastened on the image stabilization carrier 12 through the focus circuit board 231, and the focus magnetic member 222 is fastened on the focus carrier 21, when the focus magnetic conductive member 233 and the focus magnetic member 222 generate a magnetic attraction force, the focus carrier 21 is matched more tightly with the image stabilization carrier 12 under an action of the magnetic attraction force. In this way, the focus carrier 21 may be further limited in some directions on the X-Y plane, that is, movement or shaking of the focus carrier 21 in these directions is avoided, thereby ensuring stability of the focus carrier 21.

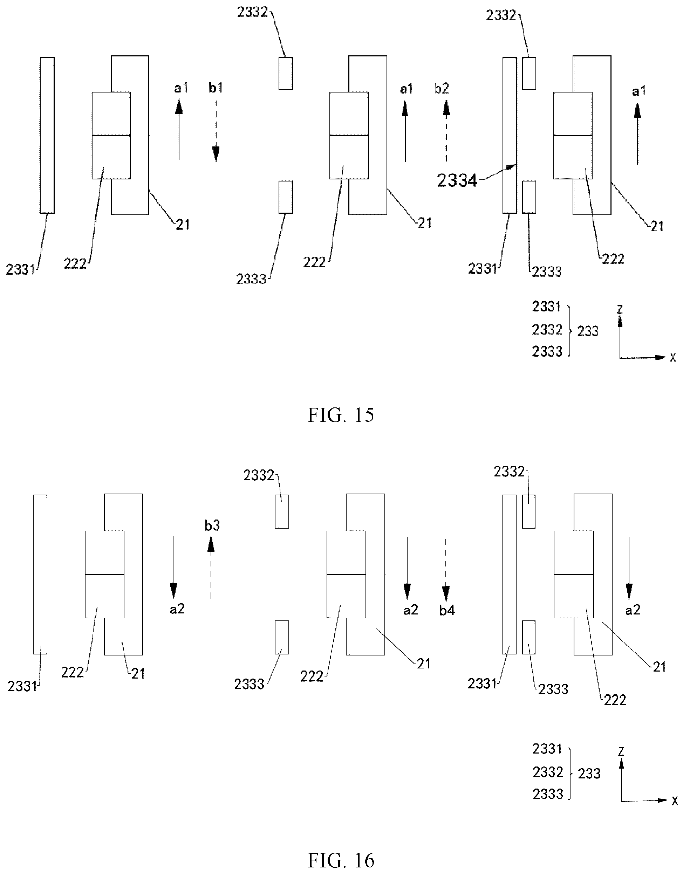

FIG. 15 is a simplified diagram of a force applied to the focus magnetic conductive member 233, the focus magnetic member 222, and the focus carrier 21 that are shown in FIG. 14 and that move in the positive direction of the Z-axis.

As shown in FIG. 15, in this embodiment, the focus magnetic conductive member 233 includes a first focus magnetic conductive member 2331, a second focus magnetic conductive member 2332, and a third focus magnetic conductive member 2333. In the Z-axis direction, the second focus magnetic conductive member 2332 and the third focus magnetic conductive member 2333 are disposed on the first focus magnetic conductive member 2331 at an interval, and both protrude from a front surface 2334 of the first focus magnetic conductive member 2331. In addition, the center of the focus magnetic member 222 is located between the center of the second focus magnetic conductive member 2332 and the center of the third focus magnetic conductive member 2333.

As shown in FIG. 15, when the focus magnetic member 222 moves in the positive direction a1 (shown by a solid line with an arrow in FIG. 15) of the Z-axis, the focus magnetic member 222 moves from a first position to a second position. A magnetic attraction force between the first focus magnetic conductive member 2331 and the focus magnetic member 222 may enable the focus magnetic member 222 to generate a first restoring force b1 (shown by a dashed line with an arrow in FIG. 15) in the negative direction of the Z-axis, and a magnetic attraction force between the second focus magnetic conductive member 2332 and the focus magnetic member 222 may enable the focus magnetic member 222 to generate a second restoring force b2 (shown by a dashed line with an arrow in FIG. 15) in the positive direction of the Z-axis. In this way, the first restoring force and the second restoring force may be approximately offset or completely offset. In this case, stability of the focus carrier 21 in a process of moving in the positive direction of the Z-axis is better.

FIG. 16 is a simplified diagram of a force applied to the focus magnetic conductive member 233, the focus magnetic member 222, and the focus carrier 21 that are shown in FIG. 14 and that move in the negative direction of the Z-axis.

As shown in FIG. 16, when the focus magnetic member 222 moves in the negative direction a2 (shown by a solid line with an arrow in FIG. 16) of the Z-axis, the focus magnetic member 222 moves from the first position to the third position. A magnetic attraction force between the first focus magnetic conductive member 2331 and the focus magnetic member 222 may enable the focus magnetic member 222 to generate a third restoring force b3 (shown by a dashed line with an arrow in FIG. 16) in the positive direction of the Z-axis, and a magnetic attraction force between the third focus magnetic conductive member 2333 and the focus magnetic member 222 may enable the focus magnetic member 222 to generate a fourth restoring force b4 in the negative direction of the Z-axis. In this way, the third restoring force and the fourth restoring force may be approximately offset or completely offset. In this case, stability of the focus carrier 21 in a process of moving in the Z-axis direction is better.

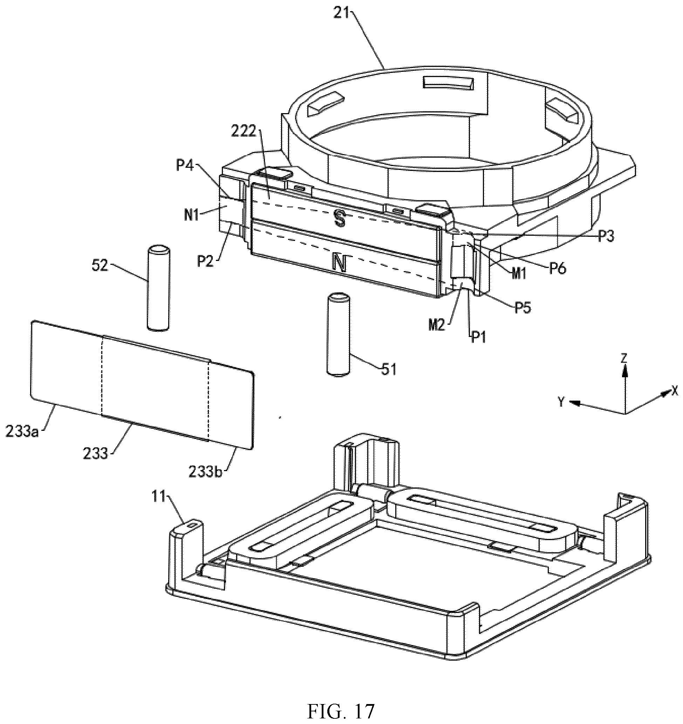

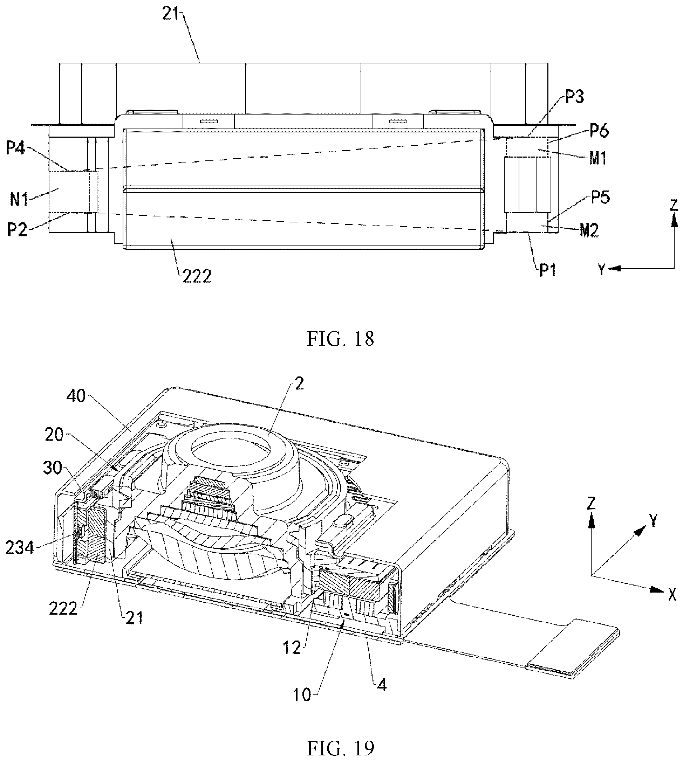

FIG. 17 is a partial exploded diagram of the motor 1 shown in FIG. 4 at an angle according to an embodimente. FIG. 18 is a partial exploded diagram of the motor 1 shown in FIG. 4 at another angle according to an embodiment.

As shown in FIG. 17 and FIG. 18, there are at least two contact positions between the focus carrier 21 and the first sliding shaft 51, for example, including a first contact position M1 (a region enclosed by dashed lines in FIG. 17 and FIG. 18) and a second contact position M2 (a region enclosed by dot dash lines in FIG. 17 and FIG. 18). The second contact position M2 is disposed closer to the base 11 than the first contact position M1, that is, a distance between the second contact position M2 and a bottom surface of the base 11 is less than a distance between the first contact position M1 and the bottom surface of the base 11.

There is at least one contact position between the focus carrier and the second sliding shaft 52, for example, including a third contact position N1 (a region enclosed by dashed lines in FIG. 17 and FIG. 18). The second contact position M2 is disposed closer to the bottom surface of the base 11 than the third contact position N1, that is, a distance between the third contact position N1 and the bottom surface of the base 11 is greater than the distance between the second contact position M2 and the bottom surface of the base 11.

The focus magnetic conductive member 233 (a region between two dashed lines in FIG. 17 and FIG. 18) is disposed closer to the first sliding shaft 51 than the second sliding shaft 52. In other words, a distance between the focus magnetic conductive member 233 and the first sliding shaft 51 is less than a distance between the focus magnetic conductive member 233 and the second sliding shaft 52. It may be understood that, portions on two sides of the focus magnetic conductive member 233 in FIG. 17 may be a first reinforcement plate 233a and a second reinforcement plate 233b. The first reinforcement plate 233a and the second reinforcement plate 233b may be configured to improve structural strength of the focus magnetic conductive member 233. The first reinforcement plate 233a and the second reinforcement plate 233b may be of an integrally formed structure with the focus magnetic conductive member 233, or may be fastened to the focus magnetic conductive member 233 in a manner such as bonding. In another embodiment, the first reinforcement plate 233a and the second reinforcement plate 233b may not be included.

It may be understood that, in some solutions, when the focus magnetic conductive member 233 and the focus magnetic member 222 are disposed on one side of the focus carrier 21, but the focus magnetic conductive member 233 and the focus magnetic member 222 are not disposed on the other side of the focus carrier 21, in a process in which the focus carrier 21 moves in the Z-axis direction, the other side of the focus carrier 21 is prone to overturn with an overturning axis as an axis due to gravity. When the screen 300 (referring to FIG. 2) of the electronic device 1000 backs to a user (that is, the camera module 100 faces the user), a first overturning axis is a connection line between a bottom boundary line of the second contact position M2 and a bottom boundary line of the third contact position N1 (a line P1-P2 shown in FIG. 17 and FIG. 18). When the screen 300 of the electronic device 1000 faces the user (that is, the camera module 100 backs to the user), a second overturning axis is a connection line between a top boundary line of the first contact position M1 and a top boundary line of the third contact position N1 (a line P3-P4 shown in FIG. 17 and FIG. 18). When the electronic device 1000 is standing on its side, a third overturning axis is a connection line between a right boundary line of the first contact position M1 and a right boundary line of the second contact position M2 (a line P5-P6 shown in FIG. 17 and FIG. 18).

However, in this embodiment, the focus magnetic conductive member 233 is disposed close to the first sliding shaft 51, so that a central position of a magnetic attraction force generated by the focus magnetic conductive member 233 and the focus magnetic member 222 is disposed close to the first sliding shaft 51. In this way, regardless of whether the focus carrier 21 is overturned by using the first overturning axis (line P1-P2) as an axis or the second overturning axis (line P3-P4) as an axis, a vertical distance (that is, an arm of force of the magnetic attraction force) between a central position of the magnetic attraction force and the overturning axis (line P1-P2 or line P3-P4) becomes longer. In this case, a moment of the magnetic attraction force increases. The moment of the magnetic attraction force is equal to a product of a magnitude of the magnetic attraction force and the arm of force of the magnetic attraction force. Because the moment of the magnetic attraction force is increased, a capability of the focus carrier 21 to resist overturning due to gravity is increased, that is, the focus carrier 21 moves more stably in the Z-axis direction.

In an embodiment, a product of the vertical distance from the central position of the magnetic attraction force generated by the focus magnetic conductive member 233 and the focus magnetic member 222 to the first overturning axis (line P1-P2) and the magnetic attraction force is greater than a gravitational moment of a focus moving component. It may be understood that the focus moving component may be related structures in the Z-axis direction, for example, the focus carrier 21, the focus magnetic member 222, the lens 2, and the variable aperture 3.

In an embodiment, a product of the vertical distance from the central position of the magnetic attraction force generated by the focus magnetic conductive member 233 and the focus magnetic member 222 to the second overturning axis (line P3-P4) and the magnetic attraction force is greater than the gravitational moment of the focus moving component.

In an embodiment, a product of the vertical distance from the central position of the magnetic attraction force generated by the focus magnetic conductive member 233 and the focus magnetic member 222 to the third overturning axis (line P5-P6) and the magnetic attraction force is greater than the gravitational moment of the focus moving component.

In an embodiment, a distance between the center of the focus magnetic conductive member 233 and the first sliding shaft 51 is a; and a distance between the first sliding shaft 51 and the second sliding shaft 52 is b, where a and b meet:

$$\frac{1}{5}b \le a < \frac{1}{2}b$$

. In this way, while the capability of the focus carrier 21 to resist overturning due to gravity is increased, the focus carrier 21 can be tightly matched with both the first sliding shaft 51 and the second sliding shaft 52 under the action of the magnetic attraction force generated by the focus magnetic conductive member 233 and the focus magnetic member 222.

FIG. 19 is a partial sectional view of the camera module 100 shown in FIG. 3 at a line C-C according to an embodyment.

As shown in FIG. 19, the focus sensor 234 may be disposed opposite to the focus magnetic member 222. The focus sensor 234 may be configured to detect magnetic field strength of the focus magnetic member 222 in different positions, to detect a position of the focus carrier 21.

It may be understood that when the focus carrier 21 moves in the Z-axis direction relative to the image stabilization carrier 12, the focus carrier 21 may drive the focus magnetic member 222 to move in the Z-axis direction relative to the image stabilization carrier 12. The focus sensor 234 may detect magnetic field strength at a position of the focus magnetic member 222. In this way, when detecting the magnetic field strength of the focus magnetic member 222, the focus sensor 234 may determine displacement of the focus carrier 21 by using the magnetic field strength. It may be understood that, the focus sensor 234 cooperates with the focus magnetic member 222, to accurately control displacement of the focus carrier 21 moving in the Z-axis direction relative to the image stabilization carrier 12, thereby implementing a closed-loop design of an assembly of the lens 2.

As shown in FIG. 19, the limiting bracket 30 is fastened on the image stabilization carrier 12. A part of the lens 2 is located on a side that is of the limiting bracket 30 and that faces the module circuit board. A part of the lens 2 passes through the limiting bracket 30, and is located on a side that is of the limiting bracket 30 and that is away from the module circuit board. In this way, when the focus carrier 21 drives the lens 2 to move in the positive direction of the Z-axis, the limiting bracket 30 may limit the lens 2 in the Z-axis direction, that is, prevent the focus carrier 21 from sliding out of the image stabilization carrier 12 in the Z-axis direction.

In an embodiment, a cushion pad may be disposed on the limiting bracket 30. When the focus carrier 21 drives the lens 2 to move to a highest position in the positive direction of the Z-axis, the lens 2 may be in contact with the cushion pad. Compared with a solution in which the lens 2 is directly in contact with the limiting bracket 30, the cushion pad in this embodiment can prevent the lens 2 from being damaged or displaced due to direct collision between the lens 2 and the limiting bracket 30.

As shown in FIG. 19, the housing 40 is fastened on the module circuit board 4. The housing 40 covers the image stabilization drive module 10, the focus drive module 20, and a part of the lens 2. A part of the lens 2 passes through the housing 40 and is located outside the housing 40. The housing 40 may be configured to protect the image stabilization drive module 10, the focus drive module, and the lens 2.

The foregoing specifically describes a structure of the focus drive module 20 of the camera module 100 with reference to related accompanying drawings. The following describes in detail circuit settings between the focus drive chip 232 and the module circuit board 4 with reference to related accompanying drawings.

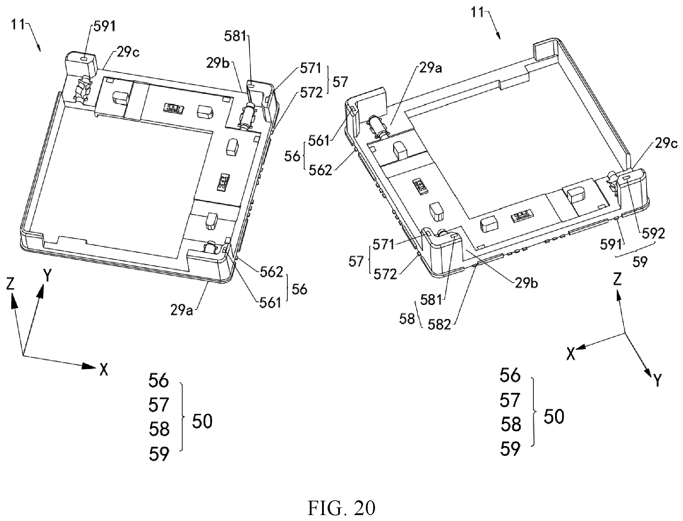

FIG. 20 is a diagram of a structure of the base 11 shown in FIG. 6 at different angles according to an embodiment.

As shown in FIG. 20, the base 11 is provided with a plurality of wiring terminals 50. For example, the wiring terminals 50 include a first wiring terminal 56, a second wiring terminal 57, a third wiring terminal 58, and a fourth wiring terminal 59.

For example, the plurality of wiring terminals 50 are fastened on the base 11 at an interval. For example, conductive tracing is used for all of the first wiring terminal 56, the second wiring terminal 57, the third wiring terminal 58, and the fourth wiring terminal 59. The first wiring terminal 56, the second wiring terminal 57, the third wiring terminal 58, and the fourth wiring terminal 59 may all be embedded in the base 11 at an interval.

For example, the first wiring terminal 56 may be embedded in a first corner portion 29a of the base 11. An entry end 561 of the first wiring terminal 56 may be exposed relative to a top surface of the first corner portion 29a. An exit end 562 of the first wiring terminal 56 may be exposed relative to a bottom surface of the first corner portion 29a.

For example, the second wiring terminal 57 may be embedded in a second corner portion 29b of the base 11. An entry end 571 of the second wiring terminal 57 may be exposed relative to a top surface of the second corner portion 29b. An exit end 572 of the second wiring terminal 57 may be exposed relative to a bottom surface of the second corner portion 29b.

For example, the third wiring terminal 58 may be embedded in the second corner portion 29b of the base 11, and is disposed at an interval from the second wiring terminal 57. An entry end 581 of the third wiring terminal 58 may be exposed relative to the top surface of the second corner portion 29b, and is disposed at an interval from the entry end 571 of the second wiring terminal 57. An exit end 582 of the third wiring terminal 58 may be exposed relative to the bottom surface of the second corner portion 29b, and is disposed at an interval from the exit end 572 of the second wiring terminal 57.

For example, the fourth wiring terminal 59 may be embedded in a third corner portion 29c of the base 11. An entry end 591 of the fourth wiring terminal 59 may be exposed relative to a top surface of the third corner portion 29c. An exit end 592 of the fourth wiring terminal 59 may be exposed relative to a bottom surface of the third corner portion 29c. The second corner portion 29b may be located between the first corner portion 29a and the third corner portion 29c.

It may be understood that, the exit end 562 of the first wiring terminal 56, the exit end 572 of the second wiring terminal 57, the exit end 582 of the third wiring terminal 58, and the exit end 592 of the fourth wiring terminal 59 may be configured to be electrically connected to the module circuit board 4 (referring to FIG. 19). In this way, an external power supply may supply power to the first wiring terminal 56, the second wiring terminal 57, the third wiring terminal 58, and the fourth wiring terminal 59 through the module circuit board 4 (referring to FIG. 19).

In another embodiment, the first wiring terminal 56, the second wiring terminal 57, the third wiring terminal 58, and the fourth wiring terminal 59 may alternatively use a flexible circuit board structure respectively. The first wiring terminal 56, the second wiring terminal 57, the third wiring terminal 58, and the fourth wiring terminal 59 may alternatively be integrated into one flexible circuit board.

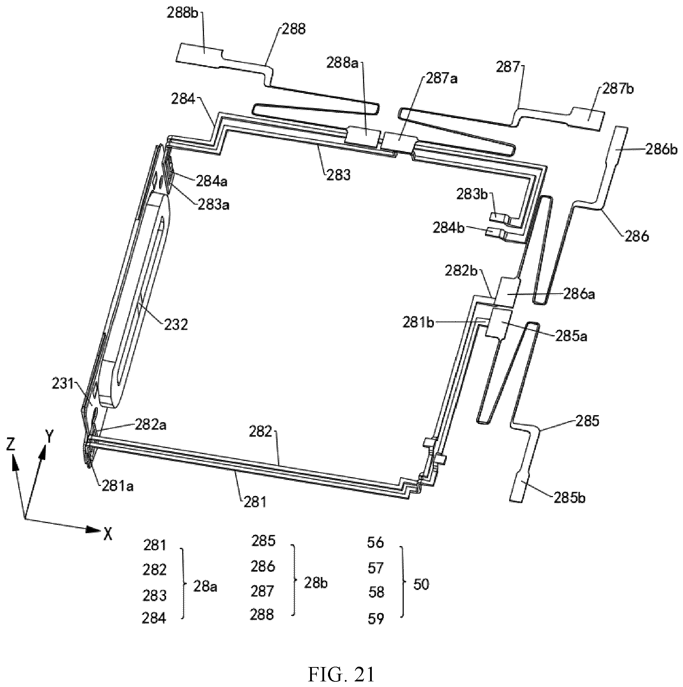

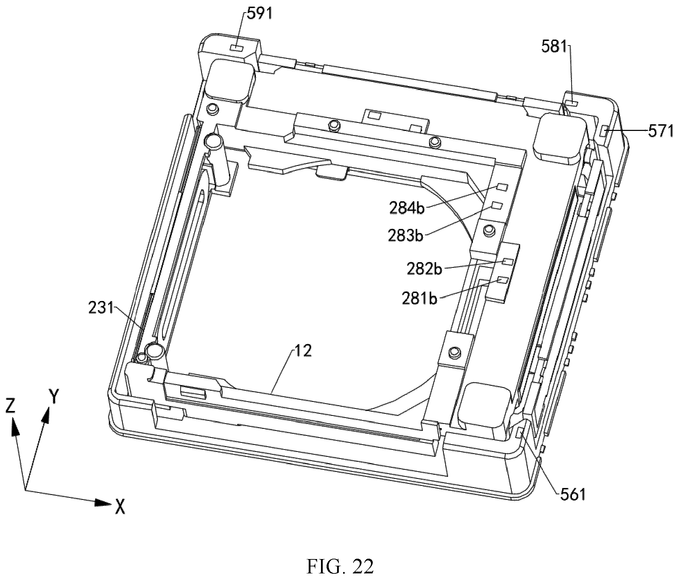

FIG. 21 is a diagram of a structure of an embodiment of a circuit for electrically connecting the focus drive chip 232 shown in FIG. 5 to an external structure. FIG. 22 is a partial diagram of a structure of the motor 1 shown in FIG. 4 according to an embodiment.

As shown in FIG. 21 and FIG. 22, the focus drive module 20 further includes a plurality of traces 28a and a plurality of conductive spring pieces 28b.

For example, the plurality of traces 28a include a first trace 281, a second trace 282, a third trace 283, and a fourth trace 284. The plurality of conductive spring pieces 28b include a first conductive spring piece 285, a second conductive spring piece 286, a third conductive spring piece 287, and a fourth conductive spring piece 288.

For example, the plurality of traces 28a are embedded on the image stabilization carrier 12 at an interval. For example, the first trace 281, the second trace 282, the third trace 283, and the fourth trace 284 are all conductive traces. The first trace 281, the second trace 282, the third trace 283, and the fourth trace 284 may all be embedded in the image stabilization carrier 12. In another embodiment, positions of the first trace 281, the second trace 282, the third trace 283, and the fourth trace 284 are not specifically limited.

For example, both an entry end and an exit end of each trace 28a are exposed relative to the image stabilization carrier 12. Exit ends of the plurality of traces 28a are electrically connected to a plurality of ports of the focus drive chip 232 in a one-to-one correspondence through the focus circuit board 231.

For example, both an entry end 281a of the first trace 281 and an exit end 281b of the first trace 281 may be exposed relative to a top surface of the image stabilization carrier 12. The entry end 281a of the first trace 281 may be electrically connected to an SDA signal end of the focus drive chip 232 through the focus circuit board 231. It may be understood that, the SDA signal end may be configured to transmit a serial data (serial data, SDA) signal of an I2C signal.

For example, an entry end 282a of the second trace 282 may be exposed relative to the top surface of the image stabilization carrier 12. The entry end 282a of the second trace 282 may be electrically connected to an SCL signal end of the focus drive chip 232 through the focus circuit board 231. An exit end 282b of the second trace 282 may be exposed relative to the top surface of the image stabilization carrier 12, and is disposed at an interval from the exit end 281b of the first trace 281. It may be understood that, the SCL signal end may be configured to transmit a serial clock (serial clock, SCL) signal of an I2C signal.

For example, an entry end 283a of the third trace 283 may be exposed relative to the top surface of the image stabilization carrier 12. The entry end 283a of the third trace 283 may be electrically connected to a positive end of a power supply of the focus drive chip 232 through the focus circuit board 231. An exit end 283b of the third trace 283 may be exposed relative to the top surface of the image stabilization carrier 12, and is disposed at an interval from the exit end 281b of the first trace 281 and the exit end 282b of the second trace 282.

For example, an entry end 284a of the fourth trace 284 may be exposed relative to the top surface of the image stabilization carrier 12. The entry end 284a of the fourth trace 284 may be electrically connected to a negative end of the power supply of the focus drive chip 232 through the focus circuit board 231. An exit end 284b of the fourth trace 284 may be exposed relative to the top surface of the image stabilization carrier 12, and is disposed at an interval from the exit end 281b of the first trace 281, the exit end 282b of the second trace 282, and the exit end 283b of the third trace 283.

In another embodiment, the first trace 281, the second trace 282, the third trace 283, and the fourth trace 284 may alternatively use a flexible circuit board structure respectively. The first trace 281, the second trace 282, the third trace 283, and the fourth trace 284 may alternatively be integrated into one flexible circuit board. Specifically, the following provides detailed descriptions with reference to related accompanying drawings.

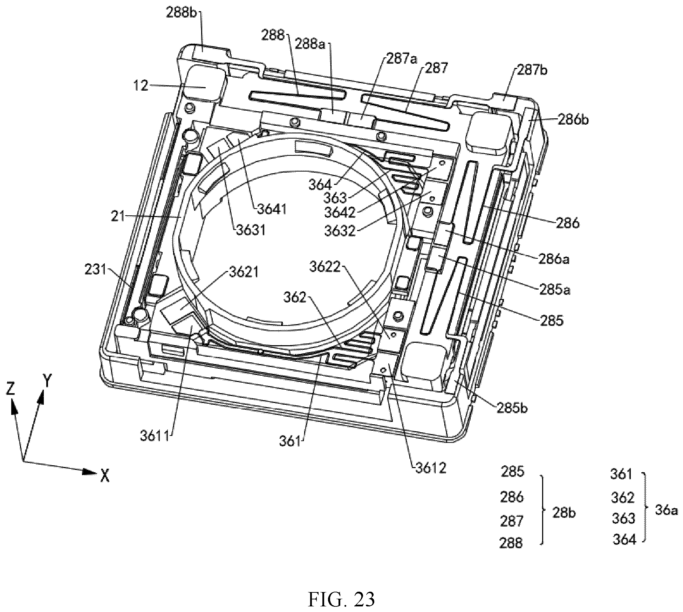

FIG. 23 is a partial diagram of a structure of the motor 1 shown in FIG. 4 according to an embodiment.

As shown in FIG. 21 to FIG. 23, the first conductive spring piece 285, the second conductive spring piece 286, the third conductive spring piece 287, and the fourth conductive spring piece 288 may all use a metal spring piece structure. The first conductive spring piece 285, the second conductive spring piece 286, the third conductive spring piece 287, and the fourth conductive spring piece 288 may all be deformed under stress, that is, have a stretchable function.

For example, the plurality of conductive spring pieces 28b are fastened on the image stabilization carrier 12 at an interval. For example, the first conductive spring piece 285, the second conductive spring piece 286, the third conductive spring piece 287, and the fourth conductive spring piece 288 may all be disposed on the top surface of the image stabilization carrier 12. It may be understood that the first conductive spring piece 285, the second conductive spring piece 286, the third conductive spring piece 287, and the fourth conductive spring piece 288 may use size space of the X-Y plane of the motor 1. In this way, the first conductive spring piece 285, the second conductive spring piece 286, the third conductive spring piece 287, and the fourth conductive spring piece 288 may be disposed in a relatively large area, thereby implementing a relatively small motion reaction force. It may be understood that, when the image stabilization carrier 12 moves in the X-Y plane relative to the base 11, the first conductive spring piece 285, the second conductive spring piece 286, the third conductive spring piece 287, and the fourth conductive spring piece 288 are deformed, and generate elastic forces. When an elastic force is opposite to a motion direction, the elastic force is a motion reaction force. In this way, areas of the first conductive spring piece 285, the second conductive spring piece 286, the third conductive spring piece 287, and the fourth conductive spring piece 288 are increased, so that lengths of the first conductive spring piece 285, the second conductive spring piece 286, the third conductive spring piece 287, and the fourth conductive spring piece 288 are increased, thereby reducing elastic forces of the first conductive spring piece 285, the second conductive spring piece 286, the third conductive spring piece 287, and the fourth conductive spring piece 288, that is, reducing motion reaction forces. If a motion reaction force of the conductive spring piece 28b appears in the following, refer to explanations of the motion reaction forces of the first conductive spring piece 285, the second conductive spring piece 286, the third conductive spring piece 287, and the fourth conductive spring piece 288. Details are not described again.

In another embodiment, the first conductive spring piece 285, the second conductive spring piece 286, the third conductive spring piece 287, and the fourth conductive spring piece 288 may alternatively be disposed on a periphery side surface of the image stabilization carrier 12.

For example, entry ends of the plurality of conductive spring pieces 28b are electrically connected to the exit ends of the plurality of traces 28a in a one-to-one correspondence. In this case, the entry ends of the plurality of conductive spring pieces 28b are electrically connected to the plurality of ports of the focus drive chip 232 in a one-to-one correspondence through the plurality of traces 28a and the focus circuit board 231.

It may be understood that an entry end 285a of the first conductive spring piece 285 is electrically connected to the exit end 281b of the first trace 281. In this case, the first conductive spring piece 285 may be electrically connected to the SDA signal end of the focus drive chip 232 through the first trace 281 and the focus circuit board 231. An entry end 286a of the second conductive spring piece 286 is electrically connected to the exit end 282b of the second trace 282. In this case, the second conductive spring piece 286 may be electrically connected to the SCL signal end of the focus drive chip 232 through the second trace 282 and the focus circuit board 231. An entry end 287a of the third conductive spring piece 287 is electrically connected to the exit end 283b of the third trace 283. In this case, the third conductive spring piece 287 may be electrically connected to the positive end of the power supply of the focus drive chip 232 through the third trace 283 and the focus circuit board 231. An entry end 288a of the fourth conductive spring piece 288 is electrically connected to the exit end 284b of the fourth trace 284. In this case, the fourth conductive spring piece 288 may be electrically connected to the negative end of the power supply of the focus drive chip 232 through the fourth trace 284 and the focus circuit board 231.

In an embodiment, the entry end 285a of the first conductive spring piece 285 may be fastened to the exit end 281b of the first trace 281 through welding, conductive adhesive, or the like. For a connection manner between the entry end 286a of the second conductive spring piece 286 and the exit end 282b of the second trace 282, a connection manner between the entry end 287a of the third conductive spring piece 287 and the exit end 283b of the third trace 283, and a connection manner between the entry end 288a of the fourth conductive spring piece 288 and the exit end 284b of the fourth trace 284, refer to a connection manner between the entry end 285a of the first conductive spring piece 285 and the exit end 281b of the first trace 281. Details are not described herein again.

As shown in FIG. 20 to FIG. 23, exit ends of the plurality of conductive spring pieces 28b are electrically connected to the plurality of wiring terminals 50 in a one-to-one correspondence.

For example, an exit end 285b of the first conductive spring piece 285 is electrically connected to the entry end 561 of the first wiring terminal 56. An exit end 286b of the second conductive spring piece 286 is electrically connected to the entry end 571 of the second wiring terminal 57. An exit end 287b of the third conductive spring piece 287 is electrically connected to the entry end 581 of the third wiring terminal 58. An exit end 288b of the fourth conductive spring piece 288 is electrically connected to the entry end 591 of the fourth wiring terminal 59.

In an embodiment, the exit end 285b of the first conductive spring piece 285 may be fastened to the entry end 561 of the first wiring terminal 56 through welding, conductive adhesive, or the like. For a connection manner between the exit end 286b of the second conductive spring piece 286 and the entry end 571 of the second wiring terminal 57, a connection manner between the exit end 287b of the third conductive spring piece 287 and the entry end 581 of the third wiring terminal 58, and a connection manner between the exit end 288b of the fourth conductive spring piece 288 and the entry end 591 of the fourth wiring terminal 59, refer to a connection manner between the exit end 285b of the first conductive spring piece 285 and the entry end 561 of the first wiring terminal 56. Details are not described herein again.

It may be understood that, the entry end 281a of the first trace 281 may be electrically connected to the SDA signal end of the focus drive chip 232 through the focus circuit board 231, the entry end 285a of the first conductive spring piece 285 is electrically connected to the exit end 281b of the first trace 281, the exit end 285b of the first conductive spring piece 285 is electrically connected to the entry end 561 of the first wiring terminal 56, and the exit end 562 of the first wiring terminal 56 is electrically connected to the circuit board module 4, so that an external power supply may input a signal into the SDA signal end of the focus drive chip 232 through the module circuit board 4, the first wiring terminal 56, the first conductive spring piece 285, the first trace 281, and the focus circuit board 231. Similarly, the external power supply may input a signal into the SCL signal end of the focus drive chip 232 through the module circuit board 4, the second wiring terminal 57, the second conductive spring piece 286, the second trace 282, and the focus circuit board 231. In addition, the external power supply may be electrically connected to the positive end of the power supply of the focus drive chip 232 through the module circuit board 4, the third wiring terminal 58, the third conductive spring piece 287, the third trace 283, and the focus circuit board 231. The external power supply may be electrically connected to the negative end of the power supply of the focus drive chip 232 through the module circuit board 4, the fourth wiring terminal 59, the fourth conductive spring piece 288, the fourth trace 284, and the focus circuit board 231.

It may be understood that, in this embodiment, because the image stabilization carrier 12 may move in any direction of the X-Y plane relative to the base 11, a distance between the image stabilization carrier 12 and the base 11 changes in an image stabilization process. Therefore, in this embodiment, the first conductive spring piece 285 with an elastic force is disposed, so that the first wiring terminal 56 of the base 11 is connected to the first trace 281 of the image stabilization carrier 12, so that when the distance between the image stabilization carrier 12 and the base 11 changes, stretching of the first conductive spring piece 285 is used to offset the distance change, to ensure that a circuit is not easily disconnected, that is, improve circuit stability. Similarly, the second conductive spring piece 286, the second conductive spring piece 286, and the fourth conductive spring piece 288 all have a similar function. Details are not described herein again.

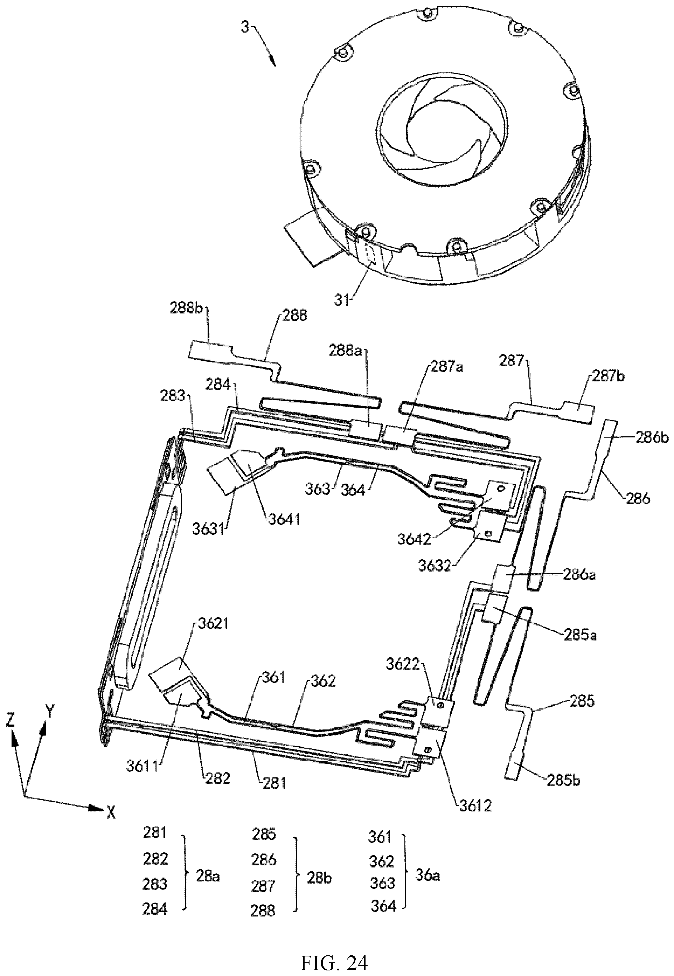

FIG. 24 is a diagram of a structure of a circuit for electrically connecting the focus drive chip 232 shown in FIG. 5 to an external structure according to another embodiment.

As shown in FIG. 23 and FIG. 24, the variable aperture 3 includes a plurality of conductive springs 36a. The plurality of conductive springs 36a include a first conductive spring 361, a second conductive spring 362, a third conductive spring 363, and a fourth conductive spring 364.

For example, the first conductive spring 361, the second conductive spring 362, the third conductive spring 363, and the fourth conductive spring 364 may all use a metal spring piece structure. The first conductive spring 361, the second conductive spring 362, the third conductive spring 363, and the fourth conductive spring 364 may all be deformed under stress, that is, have a stretchable function.

For example, the plurality of conductive springs 36a are fastened on the focus carrier 21 at an interval. For example, the first conductive spring 361, the second conductive spring 362, the third conductive spring 363, and the fourth conductive spring 364 may all be disposed on a top surface of the focus carrier 21 at an interval.

For example, entry ends of the plurality of conductive springs 36a are configured to be electrically connected to a plurality of ports of a drive chip 31 of the variable aperture 3 in a one-to-one correspondence.

It may be understood that an entry end 3611 of the first conductive spring 361 may be electrically connected to an SDA signal end of the drive chip 31 of the variable aperture 3. In an embodiment, the entry end 3611 of the first conductive spring 361 may be electrically connected to the SDA signal end of the drive chip 31 of the variable aperture 3 through a circuit board of the variable aperture 3, a wiring terminal, and the like. It may be understood that FIG. 24 schematically shows the drive chip 31 of the variable aperture 3 by using a dashed line. An actual shape, an actual size, an actual position, and an actual structure of the drive chip 31 are not limited by FIG. 24 and the following accompanying drawings.

It may be understood that an entry end 3621 of the second conductive spring 362 may be electrically connected to an SCL signal end of the drive chip 31 of the variable aperture 3. In an embodiment, the entry end 3621 of the second conductive spring 362 may be electrically connected to the SCL signal end of the drive chip 31 of the variable aperture 3 through the circuit board of the variable aperture 3, the wiring terminal, and the like.

It may be understood that an entry end 3631 of the third conductive spring 363 may be electrically connected to a positive end of a power supply of the drive chip 31 of the variable aperture 3. In an embodiment, the entry end 3631 of the third conductive spring 363 may be electrically connected to the negative end of the power supply of the drive chip 31 of the variable aperture 3 through the circuit board of the variable aperture 3, the wiring terminal, and the like.

It may be understood that an entry end 3641 of the fourth conductive spring 364 may be electrically connected to a negative end of the power supply of the drive chip 31 of the variable aperture 3. In an embodiment, the entry end 3641 of the fourth conductive spring 364 may be electrically connected to the negative end of the power supply of the drive chip 31 of the variable aperture 3 through the circuit board of the variable aperture 3, the wiring terminal, and the like.

As shown in FIG. 23 and FIG. 24, exit ends of the plurality of conductive springs 36a are electrically connected to the plurality of traces 28a in a one-to-one correspondence. In this case, the exit ends of the plurality of conductive springs 36a are electrically connected to the plurality of conductive spring pieces 28b in a one-to-one correspondence through the plurality of traces 28a.

It may be understood that an exit end 3612 of the first conductive spring 361 is electrically connected to the first trace 281. For example, a part in the middle of the first trace 281 may be exposed relative to the top surface of the image stabilization carrier 12. The exit end 3612 of the first conductive spring 361 is fastened to a middle part of the first trace 281 through welding, conductive adhesive, or the like. Certainly, in another embodiment, the exit end 3612 of the first conductive spring 361 may alternatively be electrically connected to the first trace 281 in another manner, and a position of an electrical connection is not specifically limited.

It may be understood that, for a connection manner between an exit end 3622 of the second conductive spring 362 and the second trace 282, a connection manner between an exit end 3632 of the third conductive spring 363 and the third trace 283, and a connection manner between an exit end 3642 of the fourth conductive spring 364 and the fourth trace 284, refer to a connection manner between the entry end 3611 of the first conductive spring 361 and the first trace 281. Details are not described herein again.

It may be understood that, the entry end 3611 of the first conductive spring 361 may be electrically connected to the SDA signal end of the drive chip 31 of the variable aperture 3, the exit end 3612 of the first conductive spring 361 is electrically connected to the first trace 281, the entry end 285a of the first conductive spring piece 285 is electrically connected to the exit end 281b of the first trace 281, the exit end 285b of the first conductive spring piece 285 is electrically connected to the entry end 561 of the first wiring terminal 56, and the exit end 562 of the first wiring terminal 56 is electrically connected to the module circuit board 4, so that an external power supply can input a signal into the SDA signal end of the drive chip 31 of the variable aperture 3 through the module circuit board 4, the first wiring terminal 56, the first conductive spring piece 285, the first trace 281, and the first conductive spring 361. Similarly, the external power supply may input a signal into the SCL signal end of the drive chip 31 of the variable aperture 3 through the module circuit board 4, the second wiring terminal 57, the second conductive spring piece 286, the second trace 282, and the second conductive spring 362. In addition, the external power supply may be connected to the positive end of the power supply of the drive chip 31 of the variable aperture 3 through the module circuit board 4, the third wiring terminal 58, the third conductive spring piece 287, the third trace 283, and the third conductive spring 363. The external power supply may be electrically connected to the negative end of the power supply of the drive chip 31 of the variable aperture 3 through the module circuit board 4, the third wiring terminal 58, the third conductive spring piece 287, the third trace 283, and the fourth conductive spring 364.

It may be understood that, a circuit of the SDA signal end of the drive chip 31 of the variable aperture 3, a circuit of the SCL signal end of the drive chip 31 of the variable aperture 3, a circuit of the positive end of the power supply of the drive chip 31 of the variable aperture 3, and a circuit of the negative end of the power supply of the drive chip 31 of the variable aperture 3 reuse a circuit of the SDA signal end of the focus drive chip 232, a circuit of the SCL signal end of the focus drive chip 232, a circuit of the positive end of the power supply of the focus drive chip 232, and a circuit of the negative end of the power supply of the focus drive chip 232. In this way, circuit arrangement of the motor 1 is simpler, and a structure of the motor 1 is simpler.

It may be understood that in this embodiment, because the focus carrier 21 may move in the Z-axis direction relative to the image stabilization carrier 12, a distance between the focus carrier 21 and the image stabilization carrier 12 changes in a focusing process. Therefore, in this embodiment, the first conductive spring 361 with an elastic force is disposed, to connect the variable aperture 3 of the focus carrier 21 to the first trace 281 of the image stabilization carrier 12, so that when the distance between the focus carrier 21 and the image stabilization carrier 12 changes, stretching of the first conductive spring 361 is used to offset the distance change, to ensure that a circuit is not easily disconnected, that is, improve circuit stability. Similarly, the second conductive spring 362, the second conductive spring 362, and the fourth conductive spring 364 all have a similar function. Details are not described herein again.

The foregoing describes, with reference to related accompanying drawings, an embodiment of circuit settings of the focus drive chip 232 and the drive chip 31 of the variable aperture 3. The following describes work of the focus drive chip 232 and the drive chip 31 of the variable aperture 3 with reference to related accompanying drawings.

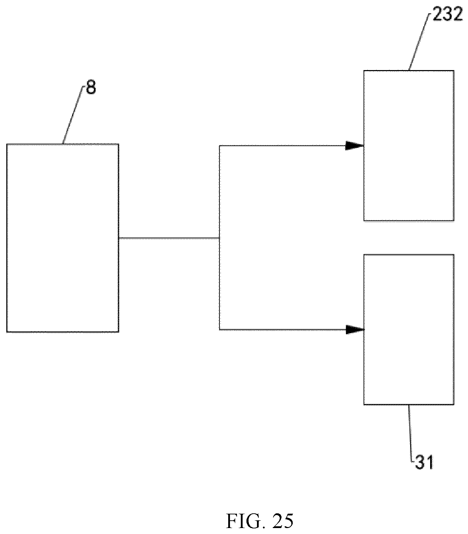

FIG. 25 is a diagram of an electrical connection relationship among a controller 8 of the motor 1, the focus drive chip 232, and the drive chip 31 of the variable aperture 3 shown in FIG. 4 according to an embodiment.

As shown in FIG. 25, the camera module 100 includes the controller 8. The controller 8 may be fastened on the module circuit board 4 (referring to FIG. 19), and is electrically connected to the module circuit board 4. The controller 8 is in communicative connection to the focus drive chip 232. The controller 8 is further in communicative connection to the drive chip 31 of the variable aperture 3. For example, the controller 8 may control working statuses of the focus drive chip 232 and the drive chip 31 of the variable aperture 3 through address control.

As shown in FIG. 25, when the camera module 100 needs to enter a focusing state, the controller 8 controls the focus drive chip 232 to be in a working state, and simultaneously controls the drive chip 31 of the variable aperture 3 to be in a non-working state (for example, the drive chip 31 of the variable aperture 3 cannot form a current loop). As shown in FIG. 20 to FIG. 22, an SDA signal may be transmitted to the SDA signal end of the focus drive chip 232 through the module circuit board 4, the first wiring terminal 56, the first conductive spring piece 285, the first trace 281, and the focus circuit board 231. In addition, an SCL signal may be transmitted to the SCL signal end of the focus drive chip 232 through the module circuit board 4, the second wiring terminal 57, the second conductive spring piece 286, the second trace 282, and the focus circuit board 231. In addition, an external power supply may supply power to the focus drive chip 232 through the module circuit board 4, the third wiring terminal 58, the third conductive spring piece 287, the third trace 283, the fourth wiring terminal 59, the fourth conductive spring piece 288, the fourth trace 284, and the focus circuit board 231.

As shown in FIG. 25, when the camera module 100 needs to enter an aperture hole adjustment state, the controller 8 controls the focus drive chip 232 to be in a non-working state (for example, the focus drive chip 232 cannot form a current loop), and simultaneously controls the drive chip 31 of the variable aperture 3 to be in a working state. As shown in FIG. 20 to FIG. 24, an SDA signal may be transmitted to the SDA signal end of the drive chip 31 of the variable aperture 3 through the module circuit board 4, the first wiring terminal 56, the first conductive spring piece 285, the first trace 281, and the first conductive spring 361. In addition, an SCL signal may be transmitted to the SCL signal end of the drive chip 31 of the variable aperture 3 through the module circuit board 4, the second wiring terminal 57, the second conductive spring piece 286, the second trace 282, and the second conductive spring 362. In addition, an external power supply may supply power to the drive chip 31 of the variable aperture 3 through the module circuit board 4, the third wiring terminal 58, the third conductive spring piece 287, the third trace 283, the third conductive spring 363, the fourth wiring terminal 59, the fourth conductive spring piece 288, the fourth trace 284, and the fourth conductive spring 364.

The foregoing describes, with reference to related accompanying drawings, an embodiment of circuit settings of the focus drive chip 232 and the drive chip 31 of the variable aperture 3. With reference to related accompanying drawings, the following further specifically describes another embodiment of circuit settings of the focus drive chip 232 and the drive chip 31 of the variable aperture 3.

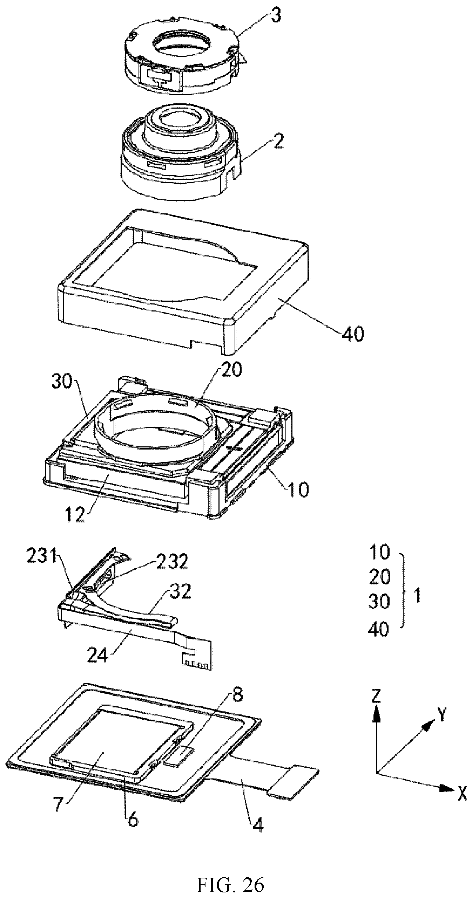

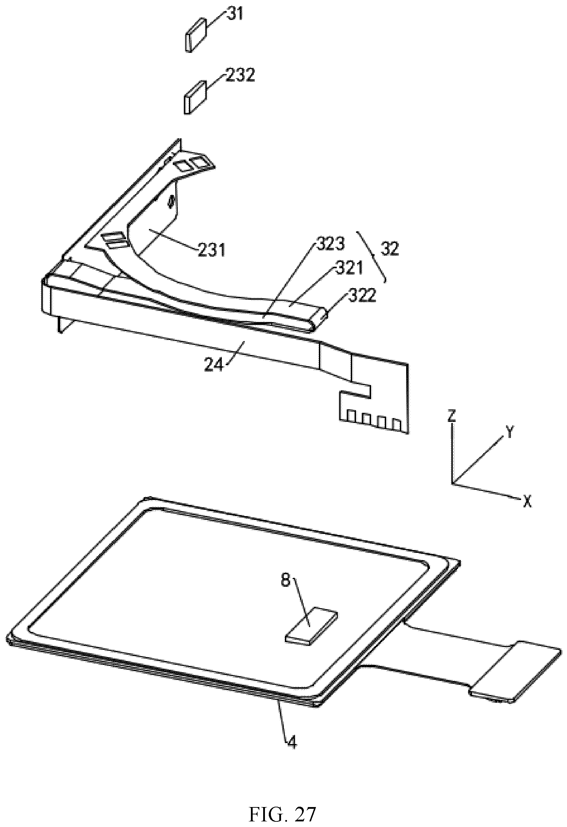

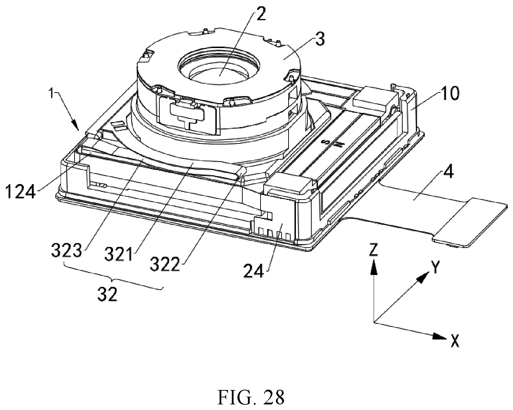

FIG. 26 is a partial exploded diagram of the camera module 100 shown in FIG. 3 according to another embodiment. FIG. 27 is a partial exploded diagram of the motor 1 shown in FIG. 26 according to an embodiment. FIG. 28 is a partial diagram of a structure of the camera module 100 shown in FIG. 3 according to another embodiment.

As shown in FIG. 26 to FIG. 28, the focus drive module 20 further includes a first flexible circuit board 24. The first flexible circuit board 24 is electrically connected between the focus circuit board 231 and the module circuit board 4. The plurality of ports of the focus drive chip 232 may be electrically connected to the module circuit board 4 through the focus circuit board 231 and the first flexible circuit board 24.

It may be understood that, when the camera module 100 needs to enter a focusing state, the controller 8 controls the focus drive chip 232 to be in a working state, and simultaneously controls the drive chip 31 of the variable aperture 3 to be in a non-working state (for example, the drive chip 31 of the variable aperture 3 cannot form a current loop). In this way, an SDA signal may be transmitted to the SDA signal end of the focus drive chip 232 through the module circuit board 4, the first flexible circuit board 24, and the focus circuit board 231. In addition, an SCL signal may be transmitted to the SCL signal end of the focus drive chip 232 through the module circuit board 4, the first flexible circuit board 24, and the focus circuit board 231. In addition, an external power supply may supply power to the focus drive chip 232 through the module circuit board 4, the first flexible circuit board 24, and the focus circuit board 231.

In an embodiment, a part of the first flexible circuit board 24 may alternatively be located between the fourth side portion 124 of the image stabilization carrier 12 and the base 11, that is, the first flexible circuit board 24 is located in magnetic-free space, thereby reducing impact on a magnetic member on the motor 1. In another embodiment, a position of the first flexible circuit board 24 is not specifically limited.

In an embodiment, the first flexible circuit board 24 may alternatively be located in peripheral length space of the image stabilization carrier 12, so that the first flexible circuit board 24 has a relatively long cantilever, thereby implementing a relatively small motion reaction force. It may be understood that, when the image stabilization carrier 12 moves in the X-Y plane relative to the base 11, the first flexible circuit board 24 is bent or deformed, and generates an acting force in an opposite direction, that is, a motion reaction force. In this way, the motion reaction force of the first flexible circuit board 24 is reduced by increasing a length of the first flexible circuit board 24. If the motion reaction force of the first flexible circuit board 24 appears in the following, refer to an explanation of the motion reaction force of the first flexible circuit board 24. Details are not described again.

As shown in FIG. 26 to FIG. 28, the variable aperture 3 further includes a second flexible circuit board 32. One end of the second flexible circuit board 32 is electrically connected to the plurality of ports of the drive chip 31 of the variable aperture 3, and the other end thereof is electrically connected to the first flexible circuit board 24. In this way, the plurality of ports of the drive chip 31 of the variable aperture 3 may be electrically connected to the module circuit board 4 through the second flexible circuit board 32 and the first flexible circuit board 24.

It may be understood that, in this embodiment, the second flexible circuit board 32 and the first flexible circuit board 24 may be of an integrally formed structure. In another embodiment, the second flexible circuit board 32 and the first flexible circuit board 24 may be two independent circuit boards. Then, the two independent circuit boards are electrically connected through an electrical connector.

It may be understood that, when the camera module 100 needs to enter an aperture hole adjustment state, the controller 8 controls the focus drive chip 232 to be in a non-working state (for example, the focus drive chip 232 cannot form a current loop), and simultaneously controls the drive chip 31 of the variable aperture 3 to be in a working state. In this way, an SDA signal may be transmitted to the SDA signal end of the drive chip 31 of the variable aperture 3 through the module circuit board 4, the first flexible circuit board 24, and the second flexible circuit board 32. In addition, an SCL signal may be transmitted to the SCL signal end of the drive chip 31 of the variable aperture 3 through the module circuit board 4, the first flexible circuit board 24, and the second flexible circuit board 32. In addition, an external power supply may supply power to the drive chip 31 of the variable aperture 3 through the module circuit board 4, the first flexible circuit board 24, and the second flexible circuit board 32.

It may be understood that, a circuit of the SDA signal end of the drive chip 31 of the variable aperture 3, a circuit of the SCL signal end of the drive chip 31 of the variable aperture 3, a circuit of the positive end of the power supply of the drive chip 31 of the variable aperture 3, and a circuit of the negative end of the power supply of the drive chip 31 of the variable aperture 3 reuse a circuit of the SDA signal end of the focus drive chip 232, a circuit of the SCL signal end of the focus drive chip 232, a circuit of the positive end of the power supply of the focus drive chip 232, and a circuit of the negative end of the power supply of the focus drive chip 232. In this way, circuit arrangement of the motor 1 is simpler, and a structure of the motor 1 is simpler.

As shown in FIG. 22, the second flexible circuit board 32 includes a first segment 321, a second segment 322, and a third segment 323. The second segment 322 is connected between the first segment 321 and the third segment 323. The first segment 321 and the third segment 323 are disposed opposite to each other. The second segment 322 is in a bent shape. In this way, the second flexible circuit board 32 is in a top-down bent and folded state. The first segment 321 is electrically connected to the plurality of ports of the drive chip 31 of the variable aperture 3. The third segment 323 is electrically connected to the first flexible circuit board 24 through the focus circuit board 231.

It may be understood that, the second flexible circuit board 32 is in a top-down bent and folded state, so that when the distance between the focus carrier 21 and the image stabilization carrier 12 changes, bendable performance of the second flexible circuit board 32 is used to offset the distance change, to ensure that a circuit is not easily disconnected, that is, improve circuit stability. In addition, a very small motion reaction force of the second flexible circuit board 32 may also be implemented.

In an embodiment, the second flexible circuit board 32 is located on the top of the motor 1, and a projection of the second flexible circuit board 32 on the motor 1 is staggered with a focus magnet. In other words, the second flexible circuit board 32 uses magnetic-free space on the top of the motor 1, thereby reducing impact on the focus magnet of the motor 1. In another embodiment, a position of the second flexible circuit board 32 is not specifically limited.

It may be understood that several circuit settings are described in this embodiment. In another embodiment, circuit settings of the focus drive chip 232 and the drive chip 31 of the variable aperture 3 are not specifically limited.

It should be noted that embodiments in this application and features in embodiments may be combined with each other without a conflict, and any combination of features in different embodiments also falls within the protection scope of this application. In other words, the foregoing described plurality of embodiments may further be combined according to an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some embodiments and embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motor (1), comprising a base (11), an image stabilization carrier (12), a focus carrier (21), an image stabilization drive mechanism (13), and a focus drive mechanism (22), wherein

   the image stabilization carrier (12) is movably connected to the base (11), the focus carrier (21) is located on an inner side of the image stabilization carrier (12), the focus carrier (21) is movably connected to the image stabilization carrier (12), and the focus carrier (21) is configured to mount a lens (2); and
   the image stabilization drive mechanism (13) is configured to drive the image stabilization carrier (12) and the focus carrier (21) to move in a first direction and/or a second direction relative to the base (11), the focus drive mechanism (22) is configured to drive the focus carrier (21) to move in a third direction relative to the image stabilization carrier (12), the first direction intersects the second direction, and the third direction is perpendicular to the first direction and the second direction.

2. The motor (1) according to claim 1, wherein the image stabilization carrier (12) is frame-shaped, and the image stabilization carrier (12) is disposed around the focus carrier (21).

3.  The motor (1) according to claim 1 or 2, wherein the focus drive mechanism (22) comprises a focus coil (221) and a focus magnetic member (222), the focus coil (221) is disposed on the image stabilization carrier (12), the focus magnetic member (222) is disposed on the focus carrier (21), and the focus coil (221) faces the focus magnetic member (222).

4.  The motor (1) according to claim 3, wherein the image stabilization carrier (12) is provided with a through hole (55), and the through hole (55) runs through an outer side surface (56a) and an inner side surface (56b) of the image stabilization carrier (12); and
    the motor (1) comprises a focus circuit board (231), the focus circuit board (231) is fastened on the outer side surface (56a) of the image stabilization carrier (12), and the focus coil (221) is fastened on the focus circuit board (231) and at least partially located in the through hole (55).

5.  The motor (1) according to claim 4, wherein the motor (1) further comprises a first focus magnetic conductive member (2331), the first focus magnetic conductive member (2331) is fastened on a side that is of the focus circuit board (231) and that is away from the focus coil (221), and the first focus magnetic conductive member (2331) is disposed opposite to the focus magnetic member (222).

6.  The motor (1) according to claim 5, wherein the motor (1) further comprises a second focus magnetic conductive member (2332) and a third focus magnetic conductive member (2333), both the second focus magnetic conductive member (2332) and the third focus magnetic conductive member (2333) are fastened on the first focus magnetic conductive member (2331), both the second focus magnetic conductive member (2332) and the third focus magnetic conductive member (2333) protrude relative to a front surface (2334) of the first focus magnetic conductive member (2331), and the front surface (2334) of the first focus magnetic conductive member (2331) faces the focus circuit board (231); and
    a center of the focus magnetic member (222) is located between a center of the second focus magnetic conductive member (2332) and a center of the third focus magnetic conductive member (2333).

7.  The motor (1) according to claim 5 or 6, wherein the focus carrier (21) is slidably connected to the image stabilization carrier (12) through a first sliding shaft (51) and a second sliding shaft (52).

8.  The motor (1) according to claim 7, wherein contact positions between the focus carrier (21) and the first sliding shaft (51) comprise a first contact position (M1) and a second contact position (M2), a contact position between the focus carrier (21) and the second sliding shaft (52) comprises a third contact position (N1), and the second contact position (M2) is disposed closer to a bottom surface of the base (11) than the third contact position (N1); and
    the first focus magnetic conductive member (2331) is disposed closer to the first sliding shaft (51) than the second sliding shaft (52).

9.  The motor (1) according to claim 8, wherein the motor (1) further comprises a first reinforcement plate (233a) and a second reinforcement plate (233b), and the first reinforcement plate (233a) and the second reinforcement plate (233b) are respectively spliced on two sides of the first focus magnetic conductive member (2331); and
    both the first reinforcement plate (233a) and the second reinforcement plate (233b) are fastened on the side that is of the focus circuit board (231) and that is away from the focus coil (221).

10. The motor (1) according to any one of claims 4 to 9, wherein the motor (1) comprises a focus drive chip (232), and the focus drive chip (232) is fastened on the focus circuit board (231);

    the motor (1) comprises a plurality of wiring terminals (50) and a plurality of conductive spring pieces (28b), the plurality of wiring terminals (50) are fastened on the base (11) at an interval, and the plurality of conductive spring pieces (28b) are fastened on the image stabilization carrier (12) at an interval; and
    entry ends of the plurality of conductive spring pieces (28b) are electrically connected to a plurality of ports of the focus drive chip (232) in a one-to-one correspondence through the focus circuit board (231), and exit ends of the plurality of conductive spring pieces (28b) are electrically connected to the plurality of wiring terminals (50) in a one-to-one correspondence.

11. The motor (1) according to claim 10, wherein the motor (1) comprises a plurality of traces (28a), the plurality of traces (28a) are embedded on the image stabilization carrier (12) at an interval, and both an entry end and an exit end of each trace (28a) are exposed relative to the image stabilization carrier (12); and
    the entry ends of the plurality of conductive spring pieces (28b) are electrically connected to exit ends of the plurality of traces (28a) in a one-to-one correspondence, and the exit ends of the plurality of traces (28a) are electrically connected to the plurality of ports of the focus drive chip (232) in a one-to-one correspondence through the focus circuit board (231).

12. The motor (1) according to claim 10 or 11, wherein the motor (1) comprises a plurality of conductive springs (36a), and the plurality of conductive springs (36a) are fastened on the focus carrier (21) at an interval; and
exit ends of the plurality of conductive springs (36a) are electrically connected to the plurality of conductive spring pieces (28b) in a one-to-one correspondence, and entry ends of the plurality of conductive springs (36a) are configured to be electrically connected to a plurality of ports of a drive chip (31) of a variable aperture (3) in a one-to-one correspondence.

13. The motor (1) according to any one of claims 4 to 9, wherein the motor (1) comprises a focus drive chip (232), and the focus drive chip (232) is fastened on the focus circuit board (231); and
the motor (1) comprises a first flexible circuit board (24), and a plurality of ports of the focus drive chip (232) are electrically connected to the first flexible circuit board (24) through the focus circuit board (231).

14. The motor (1) according to claim 13, wherein the motor (1) further comprises a second flexible circuit board (32), the second flexible circuit board (32) is configured to electrically connect a plurality of ports of a drive chip (31) of a variable aperture (3) to the first flexible circuit board (24) in a one-to-one correspondence through the focus circuit board (231).

15. The motor (1) according to claim 14, wherein the second flexible circuit board (32) comprises a first segment (321), a second segment (322), and a third segment (323), the second segment (322) is connected between the first segment (321) and the third segment (323), the first segment (321) and the third segment (323) are disposed opposite to each other, and the second segment (322) is in a bent shape; and
the first segment (321) is configured to be electrically connected to the plurality of ports of the drive chip (31) of the variable aperture (3), and the third segment (323) is electrically connected to the first flexible circuit board (24) through the focus circuit board (231).

16. The motor (1) according to claim 14 or 15, wherein the focus circuit board (231), the first flexible circuit board (24), and the second flexible circuit board (32) are of an integrally formed structure.

17. The motor (1) according to claim 13, wherein the image stabilization carrier (12) comprises a first side portion (121) and a third side portion (123) that are disposed opposite to each other, and a second side portion (122) and a fourth side portion (124) that are disposed opposite to each other, and the second side portion (122) and the fourth side portion (124) are connected between the first side portion (121) and the third side portion (123);

the image stabilization drive mechanism (13) comprises a first image stabilization coil (131), a first image stabilization magnetic member (132), a second image stabilization coil (133), and a second image stabilization magnetic member (134), the first image stabilization coil (131) is fastened on the base (11), the first image stabilization magnetic member (132) is fastened on the first side portion (121), the first image stabilization coil (131) faces the first image stabilization magnetic member (132), to drive the image stabilization carrier (12) and the focus carrier (21) to move in the first direction relative to the base (11), the second image stabilization coil (133) is fastened on the base (11), the second image stabilization magnetic member (134) is fastened on the second side portion (122), and the second image stabilization coil (133) faces the second image stabilization magnetic member (134), to drive the image stabilization carrier (12) and the focus carrier (21) to move in the second direction relative to the base (11); and
the focus coil (221) is fastened on the third side portion (123), and a part of the first flexible circuit board (24) is located between the fourth side portion (124) and the base (11).

18. A camera module (100), comprising a lens (2), an image sensor (5), and the motor (1) according to any one of claims 1 to 17, wherein the lens (2) is mounted on the focus carrier (21), and the image sensor (5) is located on a light exit side of the lens (2).

19. The camera module (100) according to claim 18, wherein the camera module (100) further comprises a variable aperture (3), and the variable aperture (3) is located on a light entry side of the lens (2).

20. An electronic device (1000), comprising a device housing (200) and the camera module (100) according to claim 18 or 19, wherein the camera module (100) is disposed in the device housing (200).

1000

FIG. 1

1000

FIG. 2

FIG. 3

100

3

2

1

7

6

Z

Y

X

5

4

FIG. 4

1

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

## INTERNATIONAL SEARCH REPORT

| | International application No. |
|---|---|
| | **PCT/CN2024/075800** |

| | |
|---|---|
| **A.** | **CLASSIFICATION OF SUBJECT MATTER** |

G02B27/64(2006.01)i; H04N23/55(2023.01)i; H04N23/68(2023.01)i; G02B7/09(2021.01)i; G03B5/00(2021.01)i; G03B13/36(2021.01)i

According to International Patent Classification (IPC) or to both national classification and IPC

| | |
|---|---|
| **B.** | **FIELDS SEARCHED** |

Minimum documentation searched (classification system followed by classification symbols)

IPC: G02B27; H04N23; G02B7; G03B5; G03B13

Documentation searched other than minimum documentation to the extent that such documents are included in the fields searched

Electronic data base consulted during the international search (name of data base and, where practicable, search terms used)

CNTXT, ENTXTC, DWPI, VEN, WPABSC: 对焦, 聚焦, 防抖, 稳定, 弹, 簧, 导磁, 线圈, focus, anti-shake, stabl+, spring, magnetic, induct+, conduct+

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 109031584 A (SAMSUNG ELECTRO-MECHANICS CO., LTD.) 18 December 2018 (2018-12-18) <br> description, paragraphs [0003]-[0118], and figures 1-7 | 1-20 |
| X | CN 104898347 A (JAHWA ELECTRONICS CO., LTD.) 09 September 2015 (2015-09-09) <br> description, paragraphs [0002]-[0108], and figures 1-11 | 1-20 |
| X | KR 20150117236 A (JA HWA ELECTRONICS CO., LTD.) 19 October 2015 (2015-10-19) <br> description, paragraphs [0002]-[0081], and figures 1-11 | 1-20 |
| A | CN 111650715 A (AAC COMMUNICATION TECHNOLOGY (CHANGZHOU) CO., LTD.) 11 September 2020 (2020-09-11) <br> entire document | 1-20 |
| A | CN 109709741 A (HUAWEI TECHNOLOGIES CO., LTD.) 03 May 2019 (2019-05-03) <br> entire document | 1-20 |
| A | CN 109348102 A (TRULY OPTO-ELECTRONICS LTD.) 15 February 2019 (2019-02-15) <br> entire document | 1-20 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **09 May 2024** | **19 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075800**

| Patent document cited in search report | | | Publication date (day/month/year) | Patent family member(s) | | | Publication date (day/month/year) |
|---|---|---|---|---|---|---|---|
| CN | 109031584 | A | 18 December 2018 | US | 2018356609 | A1 | 13 December 2018 |
| | | | | US | 10422974 | B2 | 24 September 2019 |
| | | | | KR | 20180135299 | A | 20 December 2018 |
| | | | | KR | 102029532 | B1 | 07 October 2019 |
| CN | 104898347 | A | 09 September 2015 | US | 2015256727 | A1 | 10 September 2015 |
| | | | | US | 9549109 | B2 | 17 January 2017 |
| | | | | US | 2017052388 | A1 | 23 February 2017 |
| | | | | US | 9726899 | B2 | 08 August 2017 |
| | | | | TW | 201535036 | A | 16 September 2015 |
| | | | | TWI | 588586 | B | 21 June 2017 |
| | | | | KR | 20150104964 | A | 16 September 2015 |
| | | | | KR | 101725442 | B1 | 11 April 2017 |
| | | | | WO | 2015133725 | A1 | 11 September 2015 |
| | | | | US | 2017075130 | A1 | 16 March 2017 |
| | | | | US | 9885881 | B2 | 06 February 2018 |
| | | | | EP | 3115841 | A1 | 11 January 2017 |
| | | | | EP | 3115841 | A4 | 09 August 2017 |
| | | | | EP | 3115841 | B1 | 20 March 2019 |
| KR | 20150117236 | A | 19 October 2015 | KR | 102013190 | B1 | 22 August 2019 |
| CN | 111650715 | A | 11 September 2020 | None | | | |
| CN | 109709741 | A | 03 May 2019 | None | | | |
| CN | 109348102 | A | 15 February 2019 | WO | 2020082412 | A1 | 30 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310152040